# EUROPEAN PATENT SPECIFICATION

(11) **EP 4 337 527 B1**
(45) Date of publication and mention of the grant of the patent: **17.07.2024**
(21) Application number: 22734478.5
(22) Date of filing: 10.05.2022
(51) Int. Cl.: B64D 27/40, B64U 30/12, B64C 29/00, B64U 30/29, B64C 3/38, B64C 39/08, B64D 27/24, B64D 27/02

(54) **AIRCRAFT**
FLUGZEUG
AÉRONEF

(30) Priority: 11.05.2021 GR 20210100320; 14.06.2021 GB 202108482
(43) Date of publication of application: 20.03.2024
(73) Proprietor: Kalavrianos, Synanarchos, 15562 Athens (GR)
(72) Inventor: Kalavrianos, Synanarchos, 15562 Athens (GR)
(74) Representative: Barker Brettell LLP
(86) International application number: PCT/EP2022/062683
(87) International publication number: WO 2022/238431

(56) References cited:
- WO-A1-01/62591
- WO-A1-2007/104940
- WO-A1-2012/040446
- CN-A- 101 725 467
- RU-C1- 2 709 990
- US-A- 5 098 034
- US-A1- 2007 102 575
- US-A1- 2011 038 727
- US-B1- 6 659 394

## Description

### TECHNICAL FIELD

The present invention relates to an aircraft, more specifically a VTOL or STOL aircraft.

### BACKGROUND

A fixed wing aircraft typically comprises one or more propulsion systems configured to provide horizontal thrust to cause forward movement of the aircraft. The resulting air flow over the wings of the aircraft generates lift. It may be desirable to generate more lift for a given amount of horizontal thrust, for example to reduce the length of runway required for the aircraft to take off and land or generally improve the performance of the aircraft. Typical solutions include increasing the wingspan of the aircraft, increasing the thickness of the wings of the aircraft, and increasing the fixed angle of attack of the wings of the aircraft. However, these solutions are not desirable because the size and weight of the aircraft and the drag effect on the aircraft during forward flight are increased. Aircraft performance is therefore negatively affected.

It is known to provide an aircraft which is capable of taking off and landing in environments where ground area is restricted. Such aircraft are typically configured to take off and land vertically or using a shortened runway. Aircraft configured to take off and land vertically are typically referred to as VTOL (vertical take-off and landing) aircraft. VTOL aircraft include helicopters and tilt-rotor aircraft. Aircraft configured to take off and land using a shortened runway are typically referred to as STOL (short take-off and landing) aircraft and include fixed-wing aircraft configured for short take-off and landing.

Known VTOL and STOL aircraft have a number of limitations. Helicopters are capable of taking off and landing vertically; however, their performance is compromised compared to other types of aircraft. For example, their speed in horizontal flight is limited due to the drag effects of the main rotor and the limited thrust the main rotor is capable of producing. Tilt-rotor aircraft may overcome the horizontal flight limitations of helicopters; however, the wingspan required for tilt-rotor aircraft means that such aircraft are typically much larger and heavier than a helicopter with similar payload-carrying capabilities. Shortening the wingspan of a tilt-rotor aircraft would require increasing the thickness of the wings and/or increasing the angle of attack of the wings in order to compensate for the reduced lift provided by shorter wings. This in turn would lead to an increase in the drag effect of the wings, thereby limiting aircraft performance in horizontal flight.

WO 0162591A1 discloses an engine-powered aircraft with a propeller drive system. To allow the aircraft to take off and land vertically, it is provided with a front wing mounted in a lower zone, and with a rear wing mounted in an upper zone. The angles of attack of the corresponding wings can be individually adjusted with relation to the imaginary axis of the airstream produced by the drive means during flight operation.

US 5098034A discloses a vertical/short take-off or landing aircraft. The aircraft has a canard wing, attached to the forward section of the aircraft body, that has an engine on each side. Each engine drives a pusher propeller. Located aft of the canard wing is a primary wing that includes a number of control surfaces and that is rotatably attached to the fuselage. The primary wing is rotated downwardly about its chordwise axis when the aircraft takes off or lands vertically. When short take-offs and landings are required the wing is partially rotated and during conventional flight, the wing is rotated to a position that is approximately parallel to the longitudinal axis of the aircraft.

WO 2012040446A1 discloses an aeroplane wing configuration including a first wing positioned above and forward of a second wing on an aeroplane fuselage. The first wing is operable to direct airflow over an upper surface of the second wing, whereby the first and second wings are capable of generating greater lift than a sum of their individual lifts. The first wing may include an adjustable wing flap that redirects airflow over the upper surface of the second wing, and the second wing may include a rotatable portion that pivots to vary the angle of attack of the second wing independent of the first wing.

US 6659394B1 discloses an aircraft including a fuselage, a compound tilting wing, CTW, and aircraft engines mounted on the aircraft. The CTW includes a leading-edge wing portion and a tilting main wing portion. The leading-edge wing portion and the tilting main wing portion each include a leading edge, a trailing edge, a chord, a lowe r surface, and an upper surface. The tilting main wing portion is pivotally mounted on the fuselage for rotation from a cruise flight position to various low flight speed positions. In the cruise flight position, the tilting main wing portion fits conformably with the leading-edge wing portion forming an aerodynamically single wing.

WO 2007104940A1 discloses an aircraft comprising a payload region and a wing section which carries an engine of a kind which, in use, generates a flow of exhaust gases. The wing section is provided with or has associated therewith a secondary wing section positioned in the flow of exhaust gases from the engine.

US 2007102575A1 discloses an aircraft attitude control configuration which enables control surfaces to provide attitude control for an aircraft at hover or low air speed conditions.

RU 2709990C1 discloses an aircraft capable of short or vertical take-off or landing. US 2011038727A1 discloses a method and apparatus for an adaptive aerostructure.

CN 101725467A discloses active circulation control of aerodynamic structures.

A problem presented by known aircraft is therefore how to increase the amount of lift generated by an aircraft without compromising the size and weight of the aircraft or the aircraft performance in horizontal flight.

### SUMMARY OF INVENTION

The presently claimed invention provides an aircraft comprising:
a fuselage; a first propulsion mounting spar; a first propulsion unit mounted to the fuselage by the first propulsion mounting spar; a first tiltable wing spaced apart from the first propulsion mounting spar, wherein the first tiltable wing is disposed in the wake from the first propulsion unit and arranged to tilt to vary the angle of attack of the first tiltable wing; a further propulsion mounting spar aft of the first propulsion mounting spar; a further propulsion unit mounted to the fuselage by the further propulsion mounting spar; and a further tiltable wing spaced apart from the further propulsion mounting spar, wherein the further tiltable wing is disposed in the wake from the further propulsion unit and arranged to tilt to vary the angle of attack of the further tiltable wing, wherein at least one of the first propulsion mounting spar and further propulsion mounting spar do not comprise a wing.

The tiltable wing may be configured for rotation relative to the fuselage so as to vary an angle of attack of the tiltable wing. The tiltable wing may be mounted for rotation about a spanwise axis of the wing at a root of the tiltable wing. A wing tilting actuator may be coupled to the tiltable wing to control an angle of attack of the tiltable wing. The sweep angle of the tiltable wing may be less than 5 degrees (e.g. the tiltable wing may be substantially perpendicular to the longitudinal axis of the fuselage). The sweep angle may be defined as the angle between a spanwise axis of the tiltable wing and a longitudinal axis of the fuselage in the horizontal plane. The spanwise axis of the tiltable wing may be defined as a straight line between the centre of the root chord and the centre of the tip chord. An advantage of this perpendicular mounting is to enable straightforward rotation of the whole tiltable wing by rotation on a mount at a root of the tiltable wing. The sweep angle of the tiltable wing may range from 0 degrees to any suitable angle.

The tiltable wing may be tiltable about an axis located towards the trailing edge of the wing. The tiltable wing may be mounted at a root of the wing for rotation about a spanwise axis defined as a straight line between a point along the root chord towards the trailing edge of the tiltable wing and a point along the tip chord towards the trailing edge of the tiltable wing. The aircraft may comprise an actuator configured to exert a force on the tiltable wing towards the leading edge of the tiltable wing to tilt the tiltable wing about the spanwise axis. The actuator may comprise a jackscrew. The actuator may comprise a hydraulic jackscrew. The actuator may comprise any suitable, hydraulic, mechanical, electromechanical, or other actuator.

The tiltable wing may be tiltable about an axis located towards the leading edge of the wing. The tiltable wing may be mounted at a root of the wing for rotation about a spanwise axis defined as a straight line between a point along the root chord towards the leading edge of the tiltable wing and a point along the tip chord towards the leading edge of the tiltable wing. The aircraft may comprise an actuator configured to exert a force on the tiltable wing towards the trailing edge of the tiltable wing to tilt the tiltable wing about the spanwise axis. The actuator may comprise a jackscrew. The actuator may comprise a hydraulic jackscrew. The actuator may comprise any suitable, hydraulic, mechanical, electromechanical, or other actuator.

The tiltable wing may comprise a first wing and a second wing mounted on opposing sides of the aircraft fuselage. The tiltable wing may comprise a common spar, the common spar connecting to the root of the first wing and second wing such that the two are tiltable together. The actuator may be configured to exert a force on both the first and second wing, so that both portions of the tiltable wing are tiltable with a single actuator. Alternatively, the first and second wing may not share a common spar, instead being tiltable individually. Each of the first and second wing may be provided with a separate actuator.

The tiltable wing may instead be a single wing comprising a first wing portion and second wing portion on opposing sides of the fuselage, and a central wing portion fixedly coupled to both the first and second wing portion. Such a wing may be referred to as a through wing. The actuator may exert a force on the central wing portion (or, for example, a spar therein) such that the whole wing tilts.

The entire span of the tiltable wing from root to tip on both sides of the fuselage may be tiltable. Alternatively, the tiltable wing may be only partially tiltable, wherein a portion of the wing is configured to not rotate relative to the fuselage.

For example, the tiltable wing may comprise a root portion or wing box that is fixedly coupled to the fuselage, and a tip portion on either side of the fuselage, the tip portions being tiltable relative to the root portion and the fuselage. The tip portions may comprise a spar, the spar passing through the root portion such that an actuator in the fuselage can tilt the tip portions. Preferably, at least 50%, 70%, 80%, or 90% of the wing area may be tiltable.

Disposing the tiltable wing in the wake from the propulsion unit means that air is forced over the tiltable wing by the propulsion unit. As such, the amount of lift generated by the wing is increased compared to if the wing was not disposed in the wake from the propulsion unit. In addition, an increase in induced drag resulting from increasing the angle of attack of the tiltable wing may be balanced by the "spilled" wake from the propulsion unit above the leading edge of the tiltable wing.

The wake of the propulsion unit can be defined by projecting the broadest swept region of the propulsion unit in a direction parallel with a thrust vector from the propulsion unit. This projected region can be considered the wake of the propulsion unit. The projected region may have a top boundary region and a bottom boundary region that define the top and bottom of the wake.

The top of the wake may be above an upper surface of the leading edge of the wing. This may ensure that the propulsion unit generates sufficient airflow over the tiltable wing, thereby producing sufficient lift.

The tiltable wing may be configured such that a lower surface of the wing is capable of moving below the bottom of the wake, or at least substantially towards the bottom of the projected region. Preferably the tiltable wing is configured such that the trailing edge of the tiltable wing is capable of moving below the bottom of the wake, such that airflow at the bottom of the projected region is intersected by the tiltable wing and redirected. If a substantial portion of the airflow is not intersected by the tiltable wing, a significant forward thrust may be generated. Thus, by ensuring that the tiltable wing can "block" the airflow at the bottom projected region, the aircraft may be able to hover more easily than aircraft that are not capable of such.

The tiltable wing may be configured such that it intersects the bottom of the wake when tilted to a significant proportion of the wing's maximum tilt angle (corresponding to a large angle of attack e.g. over 10 degrees or over 15 degrees or over 20 degrees). The tiltable wing may comprise additional control surfaces, for example flaps or elevons, configured to be operable to intersect the bottom of the wake.

The entire wake may flow over the upper and lower surfaces of the tiltable wing. The wake can be defined as having an upper portion and a lower portion. For example, an upper half and a lower half of the wake may be envisaged by defining a horizonal plane through the centre of the wake parallel with the thrust vector. As the angle of attack of the tiltable wing is varied, the proportion of the upper and lower portions of the wake flowing over each of the upper and lower wing surfaces may change. For example, at a high angle of attack, the entire lower portion and part of the upper portion of the wake may flow over the lower wing surface, while the remainder of the upper portion of the wake flows over the upper wing surface. When the angle of attack is reduced, more of the upper portion may flow over the upper wing surface and less of the upper portion may flow over the lower wing surface, for example. The variable proportions of the wake flowing over the upper and lower surfaces of the wing may alter the lift and/or drag generated by the wing, enabling the aircraft to operate more efficiently during VTOL/VSTOL and forward flight.

The tiltable wing, or at least a portion thereof, (for example the trailing edge of the tiltable wing) may be configured to redirect a portion of the air flow so that the redirected air flow provides a reverse thrust. A portion of the forward thrust generated by the propulsion unit may be redirected downwards by an angle greater than 90°, such that the redirected thrust has a vertically upward component and a reverse thrust component.

The reverse thrust may counteract a residual forward thrust generated by the propulsion unit. A residual forward thrust may result from a portion of the wake "spilling" around the tiltable wing. The reverse thrust may enable the aircraft to hover more easily by reducing or eliminating any net forward thrust. The reverse thrust may exceed any residual forward thrust. In such a case, the aircraft may have a net reverse thrust, enabling the aircraft to move or fly backwards.

The tiltable wing being arranged to tilt to vary the angle of attack of the tiltable wing means that the wing is tiltable relative to the fuselage. In other words, the wing is tiltable to vary an angle between a chord of the wing and a longitudinal axis of the fuselage. This means that the angle of attack of the tiltable wing can be increased to increase the amount of lift generated by the tiltable wing. The angle of attack of the tiltable wing can also be controlled to provide a vertical component of thrust generated by the propulsion unit. Furthermore, the angle of attack of the tiltable wing can be controlled to provide a horizontal component of thrust generated by the propulsion unit which may act against the increased induced drag resulting from increasing the angle of attack of the tiltable wing.

A particular advantage of the above aspect of the invention is apparent during take-off and landing manoeuvres. Before take-off, the propulsion system can be operated to force air over the tiltable wing while the aircraft is stationary. As a result of air being forced over the tiltable wing, lift is generated by the wing even without forward movement of the aircraft. The angle of attack of the tiltable wing can then be increased to increase the amount of lift generated by the wing. This may enable a vertical or shortened take-off.

The use of a tiltable wing mounted in the wake of a propulsion unit may provide further advantages over other VTOL capable aircraft configurations. For example, there may be no tilting propulsions units or propellers, which may reduce the complexity of the aircraft. Said configuration may also enable the use of smaller or shorter wings than aircraft whose wings are not mounted in the wake of the propulsion unit. This may reduce weight and cost, and may enable the operation of the aircraft in areas with spatial constraints. Mounting the tiltable wing in the wake of the propulsion may also enable the aircraft to have increased payload capacity.

The tiltable wing may be the primary lift generating wing of the aircraft. The tiltable wing may produce more than 50%, or 70%, or 80%, or 90% of the total lift generated by the aircraft. The lift generated by the tiltable wing may be sufficient to enable vertical take-off, or sufficient to enable shortened take off.

The amount of lift generated by the tiltable wing may be further increased by increasing the amount of thrust provided by the propulsion unit, thereby increasing the flow rate of air over the tiltable wing. Increasing the amount of thrust provided by the propulsion unit may overcome the inertia of the aircraft and result in forward movement of the aircraft. As the amount of thrust is further increased, the forward speed of the aircraft and the amount of lift generated by the tiltable wing may also increase. This advantageously provides for a shortened take-off compared to an aircraft comprising a wing which is not spaced apart from a propulsion unit of the aircraft, disposed in the wake from the propulsion unit and/or arranged to tilt to vary its angle of attack. In such an aircraft, sufficient lift for take-off may only be generated when the forward speed of the aircraft reaches a certain threshold, which may require a long runway to reach. The above aspect of the invention provides an aircraft in which lift is generated as soon as the propulsion unit is operated to provide thrust.

As discussed above, lift may be generated by the thrust of the propulsion unit producing an airflow over the tiltable wing. As in a conventional wing, lift is generated by airflow over the upper and lower surface of the wing. The tiltable wing may also generate lift by diverting at least a portion of the thrust of the propulsion unit. Forward thrust generated by the propulsion unit may be converted into a vertically upward thrust by intersecting the wake of the propulsion unit with the tiltable wing, thereby redirecting the airflow at least partially downwards.

During a landing manoeuvre, the angle of attack of the tiltable wing can be increased to increase the amount of lift generated by the wing. This will slow the descent rate of the aircraft without affecting the horizontal speed of the aircraft. In a conventional fixed-wing aircraft, the horizontal speed of the aircraft will typically need to be increased in order to increase lift and slow the descent rate of the aircraft. As such, a minimum horizontal speed may be required in order to achieve a required descent rate. Once the aircraft has landed, a long runway may be required in order to reduce the horizontal speed of the aircraft to zero. With an aircraft according to the above aspect of the invention, the descent rate of the aircraft can be reduced without increasing the horizontal speed of the aircraft. As such, a shorter runway may be required in order to reduce the horizontal speed of the aircraft on landing.

The aircraft according to the above aspect of the invention may be a VTOL aircraft. In other words, the lift generated by the tiltable wing from the air flow provided by the propulsion unit when the aircraft is stationary may be sufficient for vertical take-off and landing, i.e. take-off and landing requiring no or minimal forward movement of the aircraft.

According to the presently claimed invention, at least one of the propulsion mounting spars does not comprise a wing. The propulsion mounting spar may primarily be provided as a structural element for mounting the propulsion unit to the fuselage of the aircraft. In other words, the propulsion mounting spar is not configured to provide lift. The propulsion mounting spar may form part of a propulsion mounting system. The propulsion mounting system may comprise the propulsion mounting spar, one or more fasteners to mount the propulsion unit to the spar, and one or more fasteners to mount the spar to the fuselage of the aircraft. Mounting the propulsion unit on a structural spar rather than on the tiltable wing (for example on the leading edge of the wing or an under-wing pylon) may enable the tiltable wing to be shorter than in conventional aircraft, as none of the wing surface is taken up with engine mounting fixtures.

The tiltable wing may comprise an active flow control actuator. The active flow control actuator may be configured to manipulate a boundary layer of a flow of air over an upper surface of the tiltable wing to inhibit separation of the boundary layer from the upper surface of the wing. This enables the tiltable wing to adopt a greater angle of attack without the boundary layer separating, and therefore without stalling. As such, the amount of lift the tiltable wing is able to generate is increased, because higher angles of attack can be used without stalling.

In addition, a wing of a given wingspan utilising active flow control may be able to generate more lift at a given angle of attack than a wing of the same area at the same angle of attack that does not utilise active flow control. This is due to active flow control enabling an increase in the mass of air accelerated by the wing. Active flow control may therefore remove a requirement to increase the wing area and/or wingspan of the tiltable wing in order to increase the amount of lift the wing can generate. Active flow control may be particularly advantageous in embodiments in which the aircraft is configured as a VTOL aircraft.

The active flow control actuator may comprise a fluidic actuator. The fluidic actuator may comprise a slot in an upper surface of the tiltable wing configured to deliver a flow of fluid, such as air, to a boundary layer of a flow of air over an upper surface of the tiltable wing. The amount of lift generated by the tiltable wing can be increased by increasing the flow rate of fluid delivered to the boundary layer. Delivering a flow of fluid to the boundary layer may increase air entrainment over the span of the tiltable wing which may increase the mass of air accelerated by the tiltable wing, which in turn may increase the amount of lift generated by the tiltable wing. The mass of air accelerated by the tiltable wing may also be increased as a result of ejecting fluid from the slot.

The active flow control actuator may comprise a thermal, acoustic, piezoelectric, synthetic jet, electromagnetic, shape memory alloy, or MEMS actuator, or any other suitable active flow control actuator.

Active flow control is typically difficult to implement in conventional winged aircraft. Such aircraft typically comprise propulsion system components arranged together with the wings. For example, one or more propulsion units, such as gas turbine engines, may be mounted to the wings. Furthermore, wings in prior art aircraft typically accommodate fuel tanks and control surfaces (ailerons, flaps etc). As such, it has proven difficult to package active flow control components within prior art wings without significant compromise to other aspects of performance. Where an active flow control system comprises a fluidic actuator, the active flow control system may comprise one or more plenums arranged within the wings, one or more conduits configured to deliver a fluid to the one or more plenums, and one or more slots in the upper surface of the wings configured to deliver the fluid from the one or more plenums to the upper surface of the wings. In known aircraft, it may be difficult to package the plenums and conduits within the wings alongside fuel tanks. In embodiments, the propulsion unit and the tiltable wing are arranged independently of one another. As such, there is no requirement for any propulsion system components to be housed within the tiltable wing or otherwise packaged with the wing. There is therefore less restriction to packaging active flow control system components within the tiltable wing. The present invention therefore provides an easier means for implementing active flow control and achieving the associated advantages.

The tiltable wing may not accommodate a fuel tank. The tiltable wing may not accommodate any propulsion system components. In some embodiments the tiltable wing may comprise a fuel tank. It may be advantageous for the tilting wing to include fewer systems such as fuel tanks in order to simplify the implementation of the tilting function.

The tiltable wing may be arranged to tilt to provide an angle of attack of the tiltable wing of at least 20 degrees. This may help generate lift required for vertical take-off or landing. The tiltable wing may be operable at a range of tilt angles that include low angles of attack (e.g. as low as zero degrees) suitable for cruise flight, and high angles of attack (e.g. over 20 degrees).

The aircraft may comprise a single propulsion unit mounted to the fuselage by the respective propulsion mounting spar. The aircraft may comprise a plurality of propulsion units mounted to the fuselage by the respective propulsion mounting spar. The plurality of propulsion units may comprise the propulsion unit as described above. The plurality of propulsion units may comprise three or more propulsion units each configured to provide thrust. An advantage of a plurality of propulsion units is that the propulsion units and the tiltable wing can be arranged such that more of the wingspan of the tiltable wing is disposed in the wake from the propulsion units compared to if a single propulsion unit was used. A further advantage of a plurality of propulsion units is that each individual propulsion unit can be smaller compared to a single propulsion unit required to provide the same amount of thrust. As such, the total frontal surface area of the plurality of propulsion units may be smaller than that of a single propulsion unit required to provide the same amount of thrust. Therefore, the form drag caused by the plurality of propulsion units may be smaller than that of a single propulsion unit required to provide the same amount of thrust.

At least 60% of the wingspan of the tiltable wing may be disposed in the wake from the plurality of propulsion units. In some embodiments, the entire wingspan, or substantially the entire wingspan, of the tiltable wing may be disposed in the wake from the plurality of propulsion units. This may help to maximise the amount of lift that can be generated by the tiltable wing. This may be particularly advantageous in embodiments in which the aircraft is configured as a VTOL aircraft. In other embodiments, less than 60% of the wingspan of the tiltable wing may be disposed in the wake from the plurality of propulsion units.

Increasing the angle of attack of the tiltable wing and/or increasing the amount of the wingspan of the tiltable wing disposed in the wake from the one or more propulsion units advantageously increases the amount of lift the wing can generate without increasing the wingspan, thickness, or frontal area of the wing. Therefore, lift is increased without increasing the size or weight of the tiltable wing.

As discussed above, the application of active flow control and/or disposing the tiltable wing in the wake from a plurality of propulsion units means that more lift can be generated by the tiltable wing for a given wingspan of the tiltable wing. As such, an aircraft according to an embodiment of the invention may have a reduced wingspan compared to a conventional aircraft of comparable performance.

If the wingspan of a conventional aircraft is reduced, the air mass accelerated by the wings is decreased, so the amount of lift generated by the wings is decreased. To increase the air mass accelerated by the wings, and thereby increase the amount of lift generate by the wings, the thickness of the wings and/or the angle of attack of the wings would need to be increased. This in turn increases induced drag, thereby affecting the efficiency of the aircraft. In an aircraft according to an embodiment of the invention, a reduction in wingspan may not require an increase in the thickness and/or the minimum angle of attack of the tiltable wing because air mass accelerated by the tiltable wings is increased by other means, such as active flow control and/or disposing the tiltable wing in the wake from a plurality of propulsion units. As such, an aircraft according to an embodiment of the invention may experience reduced induced drag compared to a conventional aircraft of comparable performance.

The reduced overall size of the tiltable wing means that the wetted area of the tiltable wing is reduced. As such, skin friction drag is reduced, which may improve the efficiency of the aircraft. Furthermore, the application of active flow control may reduce the skin friction drag of the tiltable wing due to air sliding over an "air sheet" created on the tiltable wing by the fluidic active flow control actuator.

An aircraft according to an embodiment of the invention may have a reduced overall frontal area, for example due to thinner wings and/or smaller propulsion units, compared to a conventional aircraft of similar performance. As such, the form drag of an aircraft according to an embodiment of the invention may be less than a conventional aircraft of similar performance, thereby providing a more efficient aircraft.

The propulsion unit may not be tiltable relative to the fuselage. Where the aircraft comprises a plurality of propulsion units, one or more of the propulsion units may not be tiltable relative to the fuselage. All of the propulsion units may not be tiltable relative to the fuselage. The one or more propulsion units may have a fixed orientation relative to the fuselage. This is in contrast to a tiltrotor aircraft in which a propulsion unit, or part of a propulsion unit, is tiltable relative to a fuselage of the aircraft between a horizontal and vertical configuration. A tiltrotor aircraft may be configured to increase lift by tilting one or more propulsion units towards a vertical configuration. This typically requires the use of complex mechanical and control systems. For example, a complex system of gears is typically required to provide drive to a rotor of a propulsion unit while enabling the propulsion unit to tilt. In contrast, in the case of an aircraft according to the present invention, lift can be increased simply by tilting the tiltable wing. The complex actuation and control systems required to tilt one or more propulsion units of a tiltrotor aircraft are not required. Prior art tiltwing aircraft mount propulsion units to a tiltable wing, with the propulsion units substantially vertical in a vertical take-off mode. This results in considerable challenges to stability resulting from the very large cross-sectional area of the wing perpendicular to any cross wind (which results in weather-vaning and potential loss of control). Embodiments of the present invention may avoid this problem by generating lift from a tilted wing in the wake from a fixed propulsion unit.

One or more of the propulsion units may comprise a propeller with a fixed pitch (i.e. without systems for cyclic and/or collective pitch control). This is in contrast to a conventional helicopter, for example, which typically require complex systems to provide collective and cyclic pitch control of the blades of the main rotor of the helicopter in order to control attitude (roll, pitch) and heave. In an aircraft according to the above aspect of the invention, lift can be increased simply by increasing the angle of attack of the tiltable wing and/or by increasing airflow over the wing by increasing thrust from the propulsion units. In embodiments in which the tiltable wing comprises a fluidic active flow control actuator, lift can also be increased by increasing the flow rate of fluid delivered to an upper surface of the wing. In other embodiments, one or more of the propulsion units may comprise a propeller with variable pitch.

In certain embodiments, the tiltable wing is free from any propulsion units. No propulsion unit may be mounted to the tiltable wing. This may advantageously remove the requirement to route fuel and electrical systems, for example, through the tiltable wing.

The propulsion unit may comprise an electric propulsion unit. The propulsion unit may comprise a propeller and an electric motor configured to drive the propeller. Such propulsion units may be lighter than propulsion units reliant on combustion, which may be particularly advantageous in embodiments in which the aircraft comprises a plurality of propulsion units. It may be more straightforward to realise a distributed propulsion system (in which a high fraction of the tiltable wing is in the wake from the propulsion system) using electric propulsion units.

The generators or engines for the propulsion unit may be mounted in the fuselage or in a fairing at the top of the fuselage, along with associated intakes and exhausts. This may reduce the noise and heat signature of the aircraft.

The aircraft may comprise a propulsion system comprising the propulsion unit. The propulsion system may comprise a hybrid electric propulsion system. A hybrid electric propulsion system may provide increased range over a fully electric propulsion system, which may be advantageous in certain use cases.

The propulsion system may comprise a turboelectric propulsion system. A turboelectric propulsion system may provide advantages over other hybrid electric propulsion systems, for example by providing for increased range.

One or more components of the aircraft may be arranged on top of the fuselage. The one or more components may comprise one or more components of the propulsion system. The one or more components of the propulsion system may comprise one or more of: a gas turbine engine, a generator, a fuel tank, and a battery.

The aircraft may comprise an active flow control system comprising the active flow control actuator of the tiltable wing. The active flow control system may comprise one or more components arranged on top of the fuselage. The one or more components of the active flow control system may comprise a fluid reservoir, a pump and/or a control system configured to control the active flow control actuator.

Arranging components of the propulsion system and/or active flow control system on top of the fuselage may allow for better weight distribution of the aircraft. The aircraft may comprise a fairing housing the one or more components. This may improve the aerodynamics of the aircraft. It will be appreciated that, depending on the configuration of the aircraft, components of the propulsion system and/or active flow control system may be arranged elsewhere other than on top of the fuselage.

The aircraft may comprise one or more control surfaces mounted at the trailing edge of the tiltable wing. The one or more control surfaces may comprise at least one of a flap and an elevon. In certain embodiments, the flap may be mounted to the trailing edge of the tiltable wing and an elevon mounted to the trailing edge of the flap. The use of flap mounted elevons may be advantageous over other control surface implementations. Flap mounted elevons may provide for greater control of the aircraft during VTOL/VSTOL flight than wing tip ailerons, for example. The one or more control surfaces may be operable to increase the lift generated by the tiltable wing for a given angle of attack of the wing. The one or more control surfaces may be operable to vary an amount of lift provided by the tiltable wing. The one or more control surfaces may be operable to provide a vertical component of thrust generated by the propulsion unit. The one or more control surfaces may also be operable to provide a horizontal component of thrust generated by the propulsion unit which may act against the increased induced drag resulting from increasing the angle of attack of the tiltable wing. The aircraft control surfaces may span the entirety of the wing, or a significant portion thereof. This may increase the lift of the wing.

The one or more control surfaces may be moveable between a deployed position and a stowed position. The one or more control surfaces may be slidable between the deployed and stowed positions, such as in the case of known Fowler flaps. The tiltable wing may comprise a recess, within which the flap can be disposed when in the stowed position. This advantageously reduces the aerodynamic impact of the control surfaces when they are not required in use.

According to the presently claimed invention, the propulsion mounting spar, propulsion unit and tiltable wing are a first propulsion mounting spar, first propulsion unit and first tiltable wing, respectively. According to the presently claimed invention, the aircraft additionally comprises a further propulsion mounting spar, a further propulsion unit, and a further tiltable wing. The further propulsion unit is mounted to the fuselage by the further propulsion mounting spar. The further tiltable wing is spaced apart from the further propulsion mounting spar. The further tiltable wing is disposed in the wake from the further propulsion unit. The further tiltable wing is arranged to tilt to vary the angle of attack of the further tiltable wing.

The further tiltable wing may comprise a first wing and second wing mounted on opposing sides of the aircraft, or alternatively a single through wing, as discussed previously for the tiltable wing. Similarly, the further tiltable wing may be an entirely tiltable wing or a partially tiltable wing.

The first tiltable wing and further tiltable wing may both produce a significant proportion of the total lift generated by the aircraft. The first tiltable and further tiltable wing may together produce more than 50%, or 70%, or 80%, 90% of the total lift generated by the aircraft. Both the first tiltable wing and further tiltable wing may produce substantially similar lift. Alternatively, the first tiltable wing and further tiltable wing may produce different lift, such that either of the wings is a primary lift generating wing of the aircraft, producing more than 50%, or 75%, or 80% of the total lift generated by the aircraft.

According to the presently claimed invention, the further propulsion mounting spar is aft of the first propulsion mounting spar.

The further propulsion mounting spar may be mounted on the same side of the fuselage as the first propulsion mounting spar, or the further propulsion mounting spar may be mounted on the opposite side of the fuselage as the first propulsion mounting spar.

The further tiltable wing may be disposed out of the wake from the first propulsion unit. This may help in mitigating against the wake from the first propulsion unit disturbing a flow of air over the further tiltable wing and affecting the lift generated by the further tiltable wing. The further tiltable wing may be disposed partially or fully in the wake from the first propulsion unit.

The first tiltable wing may be arranged forward of the centre of gravity of the aircraft and the further tiltable wing may be arranged aft of the centre of gravity of the aircraft. This may help to balance the pitching moment exhibited on the aircraft by lift generated by each of the first and further tiltable wings.

The first tiltable wing may be arranged below the centre of gravity of the aircraft and the further tiltable wing may be arranged above the centre of gravity of the aircraft. Alternatively, the further tiltable wing may be arranged below the centre of gravity of the aircraft and the first tiltable wing may be arranged above the centre of gravity of the aircraft. This may help to balance the pitching moment exhibited on the aircraft by horizontal drag forces at each of the first and further tiltable wings.

Both the first tiltable wing and the further tiltable wing may be arranged above or below the centre of gravity of the aircraft. The first tiltable wing and the further tiltable wing may be arranged at the same height relative to the centre of gravity of the aircraft. The first tiltable wing and the further tiltable wing may be arranged at different heights relative to the centre of gravity of the aircraft.

It will be appreciated that the arrangement of the first and further tiltable wings relative to the centre of gravity of the aircraft may depend on the particular configuration of the aircraft. For example, the aircraft may comprise an aft ramp and it may be beneficial to arrange the further tiltable wing above the centre of gravity of the aircraft to provide greater clearance for the aft ramp.

The first tiltable wing and the further tiltable wing may be independently tiltable to independently vary the angle of attack of the first tiltable wing and the angle of attack of the further tiltable wing. In this way, the amount of lift and horizontal drag generated by the first tiltable wing and the further tiltable wing can be independently controlled. As such, the position of the centre of lift of the aircraft relative to the centre of gravity of the aircraft can be controlled.

In certain embodiments, control over pitch and roll may be accomplished using elevons on the first tiltable wing and the further tiltable wing.

This may be advantageous over attitude control by varying the angle of attack of the first tiltable wing and/or further tiltable wing, since the elevon has lower inertia and can therefore be more responsive. Control over yaw may be achieved by varying the thrust from propulsion units to produce a net yaw moment on the aircraft. A plurality of smaller propulsion units (e.g. at least 3 per wing on either side of the fuselage) compared to a single larger propulsion unit may be faster to respond to a change in a thrust control input. For example, a propeller of each of the plurality of propulsion units may be smaller than a propeller of the single larger propulsion unit. The propellers of the plurality of propulsion units will therefore have a smaller inertia. Changes in the rotational speed of the propellers of the plurality of propulsion units, and therefore changes in the amount of thrust provided by the propellers, would therefore be quicker to affect than changes in the rotational speed of the larger propeller of the single propulsion unit.

The aircraft may not comprise a horizontal stabiliser arranged at the tail of the aircraft, and/or the aircraft may not comprise a vertical stabiliser arranged at the tail of the aircraft. The aircraft may be stabilised during flight by controlling the angle of attack of the tiltable wings, using control surfaces on the tiltable wings, by controlling thrust provided by the propulsion units, and/or through control of the active flow control system where applicable. The elimination of horizontal and/or vertical stabilisers at the tail of the aircraft may reduce the aircraft's drag.

The further propulsion mounting spar, further propulsion unit, and further tiltable wing may have any of the features of the first propulsion mounting spar, first propulsion unit, and first tiltable wing, respectively, described above.

The further propulsion mounting spar may not comprise a wing. The further propulsion mounting spar may form part of a further propulsion mounting system. The further propulsion mounting system may comprise the further propulsion mounting spar, one or more fasteners to mount the further propulsion unit to the spar, and one or more fasteners to mount the spar to the fuselage of the aircraft.

The further tiltable wing may comprise an active flow control actuator, as described above with respect to the first tiltable wing or otherwise. The active flow control actuator may form part of the active flow control system described above. The further tiltable wing may be arranged to tilt to provide an angle of attack of the further tiltable wing of at least 20 degrees.

The aircraft may comprise a plurality of further propulsion units mounted to the fuselage by the further propulsion mounting spar. The plurality of further propulsion units may comprise the further propulsion unit described above. The plurality of first propulsion units and the plurality of further propulsion units may together form a distributed propulsion system or part of a distributed propulsion system.

At least 60% of the wingspan of the further tiltable wing may be disposed in the wake from the plurality of further propulsion units. In some embodiments, the entire wingspan, or substantially the entire wingspan, of the further tiltable wing may be disposed in the wake from the plurality of further propulsion units. In other embodiments, less than 60% of the wingspan of the further tiltable wing may be disposed in the wake from the plurality of further propulsion units.

The further propulsion unit may not be moveable relative to the fuselage. Where the aircraft comprises a plurality of further propulsion units, one or more of the further propulsion units may not be tiltable relative to the fuselage. All of the further propulsion units may not be tiltable relative to the fuselage. The one or more propulsion units may have a fixed orientation relative to the fuselage.

No propulsion unit may be mounted to the further tiltable wing.

The further propulsion unit may comprise an electric propulsion unit. The further propulsion unit may form part of the propulsion system described above.

A particular advantage is provided by embodiments in which the first and further propulsion units are independently controllable to independently vary an amount of thrust generated by the first propulsion unit and an amount of thrust generated by the further propulsion unit, and the first and further propulsion units comprise an electric propulsion unit. Each electric propulsion unit may comprise an electric motor configured to drive a propeller. Electric motors typically do not exhibit significant delay in providing torque, so the required angular velocity of the propeller can be reached quickly. The propeller can be `spun up' and `spun down' quickly, which advantageously improves the independent control of the propulsion units.

The aircraft may comprise one or more control surfaces mounted at the trailing edge of the further tiltable wing. The one or more control surfaces may comprise at least one of a flap and an elevon. In certain embodiments, the flap may be mounted to the trailing edge of the further tiltable wing and an elevon mounted to the trailing edge of the flap. The one or more control surfaces may be operable to increase the lift generated by the further tiltable wing for a given angle of attack of the wing. The one or more control surfaces may be operable to vary an amount of lift provided by the further tiltable wing. The one or more control surfaces may be operable to provide a vertical component of thrust generated by the further propulsion unit. The one or more control surfaces may also be operable to provide a horizontal component of thrust generated by the further propulsion unit which may act against the increased induced drag resulting from increasing the angle of attack of the further tiltable wing.

The one or more control surfaces may be moveable between a deployed position and a stowed position. The one or more control surfaces may be slidable between the deployed and stowed positions, such as in the case of known Fowler flaps. The further tiltable wing may comprise a recess, within which the flap can be disposed when in the stowed position.

Control of flight of an aircraft according to an embodiment of the present invention may be affected through independent control of one or more of: the angle of attack of one or more tiltable wings; the amount of thrust provided by one or more propulsion units; an active flow control system; and one or more control surfaces. This may enable the aircraft to perform manoeuvres more efficiently compared to known aircraft.

### BRIEF DESCRIPTION OF THE DRAWINGS

Embodiments of the invention will now be described, by way of example only, with reference to the accompanying drawings:
Figure 1 shows a schematic plan view of an aircraft according to an embodiment of the invention;
Figure 2 shows a schematic side view of a propulsion unit and a tiltable wing of the aircraft of Figure 1;
Figure 3 shows a schematic isometric view of a wing of the aircraft of Figure 1;
Figure 4 shows a schematic close-up side view of a portion of the wing of Figure 3;
Figure 5 shows a schematic side view of the aircraft of Figure 1;
Figure 6 shows another schematic side view of the aircraft of Figure 1;
Figure 7 shows a schematic front view of the aircraft of Figure 1;
Figure 8 shows a schematic plan view of an aircraft according to an example not covered by the presently claimed invention;
Figure 9 shows a schematic plan view of an aircraft according to an alternative embodiment of the invention;
Figure 10 shows a schematic side view of the aircraft of Figure 9;
Figure 11 shows a schematic plan view of an aircraft according to an example not covered by the presently claimed invention; and
Figure 12 shows a flow chart illustrating an example vertical take-off procedure of an aircraft according to an embodiment of the invention.

### DETAILED DESCRIPTION

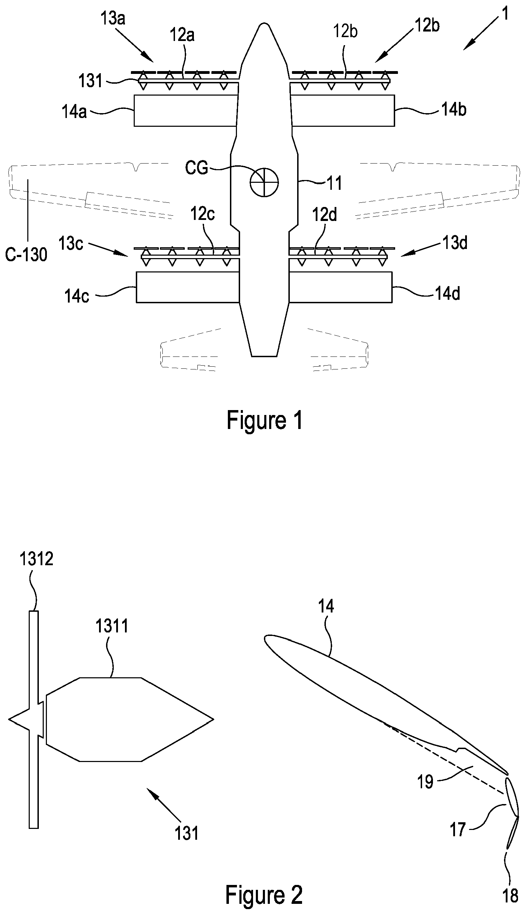

Figure 1 shows a schematic plan view of an aircraft 1 according to an embodiment of the invention.

The aircraft 1 comprises: fuselage 11, forward propulsion mounting spars 12a, 12b, forward tiltable wings 14a, 14b, aft propulsion mounting spars 12c, 12d, and aft tiltable wings 14c, 14d and propulsion units 131 (only one of which is labelled, for clarity).

Each propulsion unit 131 is mounted to the fuselage 11 by a propulsion mounting spar 12a-d.

The forward tiltable wings 14a, 14b are spaced apart from the forward propulsion mounting spars 12a, 12b and disposed in the wake from the propulsion units 131 of the forward propulsion mounting spars 12a, 12b. Each forward tiltable wing 14a, 14b is arranged to tilt to vary their angle of attack. For example, the port and starboard forward tiltable wings 14a, 14b may each be configured to rotate about a spanwise axis about a mount at their respective roots. A port and starboard forward tiltwing actuator may be provided to independently control the angle of attack of each of the forward tiltable wings 14a, 14b.

The aft tiltable wings 14c, 14d are spaced apart from the aft propulsion mounting spar 12c, 12d and disposed in the wake from the propulsion units 131 thereof. The aft tiltable wings 14c, 14d are each arranged to tilt to vary their angle of attack. For example, the port and starboard aft tiltable wings 14c, 14d may each be configured to rotate about a spanwise axis about a mount at their respective roots. An aft tiltwing actuator may be provided to independently control the angle of attack of the aft tiltable wings 14c, 14d.

In the example embodiment, the forward tiltable wing 14a, 14b and aft tiltable wing 14c, 14d are essentially identical. While this may be advantageous in some respects (simplicity, ease of maintenance), in other embodiments the forward and aft tiltable wings may be different (e.g. with different chord, span, area etc).

Figure 1 shows the aircraft 1 superimposed on a schematic plan view of a Lockheed C-130 Hercules, which is an example of a typical transport aircraft. This gives an indication of the scale of the aircraft 1. In other embodiments, the aircraft 1 may be smaller or larger (any size). A military transport aircraft with VTOL/STOL capability may be particularly useful.

The propulsion units 131 comprise a first group of propulsion units 13a mounted on the port forward propulsion mounting spar 12a and a second group of propulsion units 13b mounted on the starboard forward propulsion mounting spar 12b. The propulsion units 131 comprise a third group of propulsion units 13c mounted on the port aft propulsion mounting spar 12c and a fourth group of propulsion units 13d mounted on the starboard aft propulsion mounting spar 12d. Each group of propulsion units 13a-d comprises four propulsion units 131. In other embodiments there may be different numbers of propulsion units in the forward and aft groups. In other embodiments there may be 1, 2,3 or more than 4 propulsion units per group.

In the example embodiment, the forward groups of propulsion units 13a, 13b and aft groups of propulsion units 13c, 13d are essentially identical. While this may be advantageous in some respects (simplicity, ease of maintenance), in other embodiments the forward and aft groups of propulsion units may be different (e.g. with a different number of propulsion units, propeller diameter, propeller angle of attack etc).

Together, the groups of propulsion units 13a-d form a distributed propulsion system.

The centre of gravity of the aircraft is labelled in Figure 1 as 'CG'. The forward propulsion mounting spars 12a,b, forward groups of propulsion units 13a,b, and forward tiltable wings 14a,b are arranged forward of and on either side of the centre of gravity CG of the aircraft 1. The aft propulsion mounting spars 12c,d, aft groups of propulsion units 13c,d, and aft tiltable wings 14c,d are arranged aft of and on either side of the centre of gravity CG of the aircraft 1. Each tiltable wing 14a-d may be independently tiltable to independently vary the angle of attack of the respective tiltable wing 14a-d (with independent control over port and starboard sides in both forward and aft wings).

Varying the angle of attack of one of the wings 14a-d varies the amount of lift and horizontal drag generated by that wing. By independently varying the angle of attack of the wings 14a-d, the position of the centre of lift and the centre of horizontal drag of the aircraft 1 relative to the centre of gravity CG of the aircraft can be controlled. This allows for control of the pitch, roll and yaw of the aircraft 1 through independent control of the angle of attack of the tiltable wings 14a-d.

For example, to pitch the aircraft upwards, the angle of attack of the forward tiltable wings 14a,b could be increased simultaneously to increase the amount of lift generated by the first and second tiltable wings 14a,b relative to that generated by the aft tiltable wings 14c,d. Similarly, roll of the aircraft 1 can be controlled by controlling the angle of attack of the port tiltable wings 14a,c relative to the angle of attack of the starboard tiltable wings 14b,d.

Alternatively, or in addition, control surfaces on the wings 14a-d can be used to control pitch and roll. For example, differential pitch on port elevons relative to starboard elevons will result in roll moments, and differential pitch on forward elevons relative to aft elevons will result in pitch moments.

Yaw of the aircraft 1 can be controlled through independent control of the groups of propulsion units 13a-d. An imbalance in thrust between the port 13a, 13c and starboard 13b, 13d groups of propulsion units will result in a yaw moment. Each group of propulsion units 13a-d is independently controllable to independently vary an amount of thrust generated by the respective group of propulsion units 13a-d. A change in thrust from a particular group of propulsion units will be associated with a change in lift from the tiltable wing in the wake from that group of propulsion units, so there is coupling between the various control systems, which may be taken into account in a fly-by-wire control system comprising a flight computer. In practice, appropriate combinations of control surface movements, changes in tiltwing angles and changes in thrust from different groups of propulsion units may be determined by a flight computer, based on control inputs and sensor data related to a measured attitude and velocity of aircraft.

One or more fasteners are used to mount the propulsion units 131 to the spars 12, and one or more fasteners are used to mount the spars 12 to the fuselage 11. Each spar 12 may comprise any suitable structural member configured to support the weight of the propulsion units 131 and resist flight loads as appropriate. The fasteners may comprise any suitable fasteners, such as bolts, rivets or welds.

Figure 2 shows a schematic side view of a propulsion unit 131 and the tiltable wing 14 that is disposed in the wake from the propulsion unit 131. Each propulsion unit 131 in this embodiment comprises an electric motor 1311 and a propeller 1312. The electric motor 1311 is configured to drive rotation of the propeller 1312 to generate thrust.

The electric motor 1311 of each propulsion unit 131 may be powered by one or more batteries. The propulsion system may be a fully electric propulsion system, in which case the one or more batteries may be replaceable, or rechargeable via an external power source. Alternatively, the propulsion system may be a hybrid electric propulsion system, in which case the one or more batteries may be rechargeable via a generator forming part of the aircraft 1. Alternatively, the generator may be configured to provide electrical energy directly to the motor 1311. The generator may be driven by one or more combustion engines, such as a gas turbine engine, forming part of the aircraft 1. A hybrid electric propulsion system comprising a gas turbine engine configured to drive a generator may be termed a turboelectric propulsion system.

The propulsion units 131 are not tiltable relative to the fuselage 11. The propulsion units 131 therefore adopt the orientation shown in Figures 1 and 2, in which they are configured to provide horizontal thrust, throughout the operation of the aircraft 1. In other embodiments, one or more of the propulsion units 131 may be tiltable relative to the fuselage 11, such that the direction of thrust provided by the or each propulsion unit 131 can be altered. In other embodiments, one or more of the propulsion units 131 may be ducted.

The aircraft 1 may comprise any suitable means to tilt the wings 14 to vary the angle of attack of the wings 14. For example, each wing 14 may be rotationally fixed to a shaft extending longitudinally along the span of the wing 14. The wing 14 may be mounted to the fuselage 11 via the shaft, with the shaft rotatably mounted to the fuselage. The aircraft 1 may comprise one or more electric motors configured to rotate the shaft, and in turn tilt the wing 14. In other example, the aircraft 1 may comprise a hydraulic actuator, or a combination of a hydraulic actuator and an electric motor, configured to tilt the wing 14. In some examples, the wing 14 may be configured to tilt about a spanwise axis located towards the trailing edge of the wing 14. The aircraft 1 may comprise an actuator configured to exert a force on the wing 14 towards the leading edge of the wing 14 to tilt the tiltable wing about the spanwise axis.

Disposing the tiltable wings 14 in the wake from the propulsion units 131 means that air is forced over the tiltable wings 14 by the propulsion units 131. As a result of the flow of air over the wings 14, the wings 14 generate lift. Tilting the wings 14 to increase the angle of attack of the wings 14 increases the amount of lift generated by the wings 14. Figure 2 shows the wing 14 at an increased angle of attack compared to a default or neutral position. This angle of attack may be adopted during take-off and/or landing manoeuvres. In some embodiments, the amount of lift generated by the tiltable wing 14 at this angle of attack may be sufficient for vertical take-off and/or landing.

As shown in Figure 2, the aircraft 1 comprises control surfaces in the form of a flap 17 mounted to the trailing edge of the tiltable wing 14 and an elevon 18 mounted to the trailing edge of the flap 17. The control surfaces 17, 18 are operable to increase the lift generated by the wing 14 for a given angle of attack of the wing 14. Figure 2 shows the control surfaces 17, 18 in a deployed position in which the control surfaces 17, 18 are positioned to increase lift generated by the wing 14. The control surfaces 17, 18 are positioned to direct air forced towards the wing 14 by the propulsion unit 131 downwards to provide a vertical component of thrust generated by the propulsion unit 131 to complement the lift provided by the wing 14. This may provide sufficient lift for vertical take-off and/or landing. During horizontal flight, the control surfaces 17, 18 can be used to control the pitch and roll of the aircraft 1 in a manner known in conventional fixed wing aircraft.

When the angle of attack of the tiltable wing 14 is increased, it will be appreciated that some of the wake from the propulsion unit 131 will 'spill' over the leading edge of the wing 14. In addition, the control surfaces 17, 18 may direct air forced towards the wing 14 by the propulsion unit 131 in a direction downwards and towards the rear of the aircraft 1. As such, there will be a horizontal component of the thrust generated by the propulsion unit 131 pushing the aircraft 1 forward. In order to balance this horizontal component of thrust, for example to provide for a vertical take-off without horizontal movement, the angle of the control surfaces 17, 18 can be controlled to redirect air forced towards the wing 14 by the propulsion unit 131 downwards and towards the front of the aircraft 1. For example, the elevon 18 can be controlled to point towards the front of the aircraft 1. In addition, the angle of attack of the tiltable wing 14 can be further increased to increase induced drag to act against the horizontal component of thrust.

The wing 14 further comprises a recess 19. When the control surfaces 17, 18 are not required, for example after take-off during horizontal flight, the flap 17 can be moved to a stowed position in it is disposed within the recess 19 (with the elevon still operable). This stowed configuration may reduce drag. As viewed in Figure 2, the flap 17 and elevon 18 are pivoted about the trailing edge of the wing 14 and the trailing edge of the flap 17, respectively, towards the underside of the wing 14 until they are disposed within the recess 19. This may be achieved in any suitable manner, for example by using one or more electric motors. In other embodiments, the control surfaces 17, 18 may be slidable between the stowed and deployed positions in a manner similar to a known Fowler flap. In some embodiments, the elevon 18 may be independent of the flap 17 (e.g. part of the span of the wing may comprise an elevon, and part of the span of the wing may comprise a flap). In such an embodiment, the elevon may be disposed adjacent the tip of the wing.

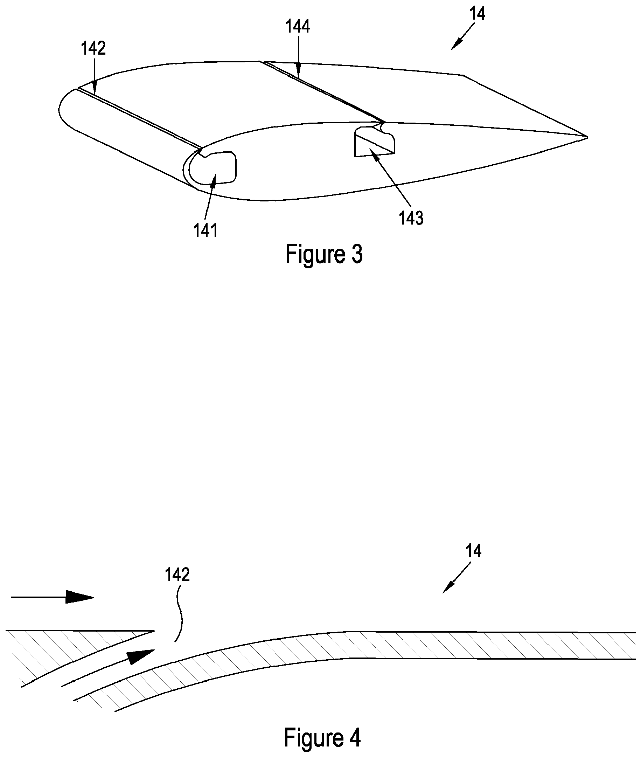

Figure 3 shows a schematic view of one of the tiltable wings 14 of the aircraft 1. The tiltable wing 14 comprises an active flow control actuator. In this example, the tiltable wing 14 comprises two active flow control actuators. Each active flow control actuator comprises a fluidic actuator that is configured to eject air from the wing. A first one of the fluidic actuators comprises a leading-edge plenum 141 and a leading-edge slot 142. The leading-edge plenum 141 and leading-edge slot 142 are so called because they are arranged proximate the leading-edge of the tiltable wing 14. The leading-edge slot 142 is not necessarily arranged at the leading edge of the wing 14. The other fluidic actuator comprises a mid-chord plenum 143 and a mid-chord slot 144. The mid-chord plenum 143 and mid-chord slot 144 are so called because they are arranged proximate a midpoint of the chord of the tiltable wing 14.

The aircraft 1 comprises an active flow control system comprising the leading-edge plenum 141, the leading-edge slot 142, the mid-chord plenum 143, and the mid-chord slot 144. The active flow control system further comprises a pump, a control system, and one or more conduits. The pump is configured to pressurise air and the one or more conduits are configured to deliver pressurised air from the pump to the leading-edge plenum 141 and the mid-chord plenum 143. The control system is configured to control the pump to produce pressurised air as required. In other embodiments, one or more gas turbine engines of the propulsion system of the aircraft may be used as a source of pressurised air. In such embodiments, the pump may not be provided. The control system may comprise any suitable combination of one or more controllers, processors, or memories.

The leading-edge slot 142 and the mid-chord slot 144 are configured to deliver pressurised air to the upper surface of the tiltable wing 14 so as to manipulate the boundary layer of a flow of air flowing over the tiltable wing 14 in use. This inhibits separation of the boundary layer from the upper surface of the wing 14. This enables the wing 14 to adopt a greater angle of attack, and therefore generate more lift, before stalling. In addition, active flow control increases the amount of lift generated for a given wing area and/or wing span (for example due to the increased mass of air accelerated by the active flow control). The active flow control system can be controlled to control the amount of lift generated by the wing 14 and/or to allow the wing 14 adopt a greater angle of attack without stalling. There may be coupling between the active flow control system and other control systems of the aircraft, which may be taken into account in a fly-by-wire control system comprising a flight computer. In practice, appropriate combinations of control surface movements, changes in tiltwing angles and changes in thrust from different groups of propulsion units, as described above, and control of active flow control may be determined by a flight computer, based on control inputs and sensor data related to a measured attitude and velocity of aircraft.

Figure 4 shows a schematic close-up side view of the wing 14 in the region of the leading-edge slot 142. The arrows in Figure 4 show the direction of a flow of pressurised air delivered to the upper surface of the wing 14 via the leading-edge slot 142, and the direction of the flow of incoming air over the wing. It will be appreciated that Figure 4 is merely illustrative, and that the dimensions and geometry of the wing 14 in the region of the leading-edge slot 142 may be different to those shown in Figure 4. For example, there may be a height difference between the upper surface of the wing 14 forward of the slot 142, towards the leading-edge of the wing 14, and the upper surface of the wing 14 aft of the slot 142. The upper surface of the wing 14 forward of the slot 142 may be higher than the upper surface of the wing 14 aft of the slot 142.

In other embodiments, only the leading-edge plenum 141 and leading-edge slot 142, or only the mid-chord plenum 143 and mid-chord slot 144 may be present, or one or more further plenum and associated slot may be provided in addition to the leading-edge plenum 141, leading-edge slot 142, mid-chord plenum 143, and mid-chord slot 144. Alternatively, or additionally, the active flow control system may comprise a plenum and associated slot located elsewhere on the tiltable wing 14. In other embodiments, the active flow control system may comprise an actuator other than a fluidic actuator, such as a thermal, acoustic, piezoelectric, synthetic jet, electromagnetic, shape memory alloy, or MEMS actuator. Any suitable active flow control system may be provided which enables the tiltable wing 14 to adopt a required angle of attack before stalling. For example, any active flow control system which enables the tiltable wing 14 to adopt an angle of attack required for vertical take-off and/or landing may be provided. Any suitable number of actuators may be provided. In other embodiments of the invention, the active flow control system may not be present.

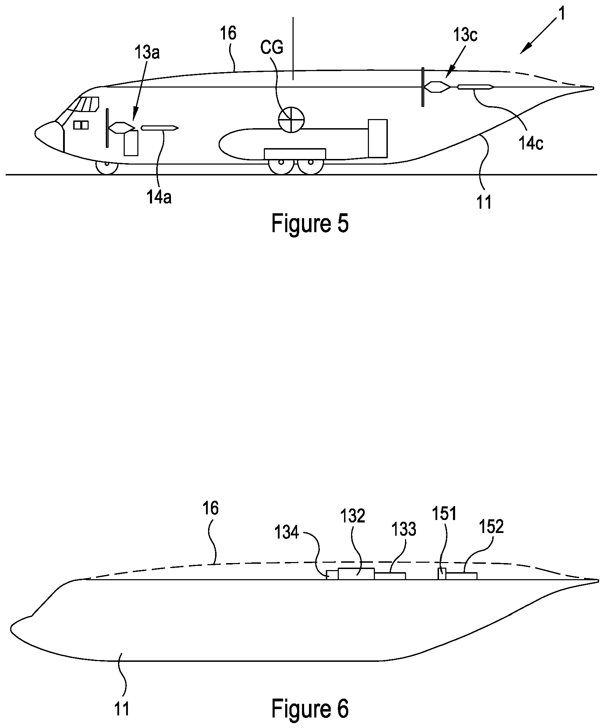

Figure 5 shows a schematic side view of the aircraft 1 of Figure 1. The forward groups of propulsion units 13a,b and the forward tiltable wing 14a,b are arranged below the centre of gravity CG of the aircraft 1. The aft groups of propulsion units 13c,d and the aft tiltable wings 14c,d are arranged above the centre of gravity CG of the aircraft 1. The aircraft 1 further comprises a fairing 16 defining a space between the fairing 16 and the top of the fuselage 11.

In alternative embodiments, the aircraft 1 may comprise one or more tiltable wings and one or more propulsion units mounted above the fuselage. For example, the aircraft may comprise a single tiltable wing mounted above the fuselage.

Figure 6 shows another schematic side view of the aircraft 1, with the fairing 16 shown in cross-section. For clarity, not all features of the aircraft 1 are labelled or shown in Figure 6. In this embodiment, the propulsion system of the aircraft 1 comprises a gas turbine engine 132, a fuel tank 133, and a generator 134. The propulsion system is configured to convert chemical energy from fuel stored in the fuel tank 133 into kinetic energy using the gas turbine engine 132 in a known manner. This kinetic energy is used to drive the generator 134 to create electrical energy. This electrical energy is used to charge one or more batteries, which are used to power an electric motor of each propulsion unit 131. Alternatively, the electrical energy may be suppled directly to the motor from the generator. Figure 6 also shows further features of the active flow control system of the aircraft 1. Figure 6 shows the pump 151 and the control system 152 of the active flow control system of the aircraft 1.

The gas turbine engine 132, fuel tank 133, generator 134, pump 151 and control system 152 are arranged on top of the fuselage 11. The fairing 16 houses the gas turbine engine 132, fuel tank 133, generator 134, pump 151 and control system 152. Further components of the aircraft 1 may also be housed within the fairing 16 on top of the fuselage 11. In other embodiments, one or more of the gas turbine engine 132, fuel tank 133, generator 134, pump 151 and control system 152, may be housed within the fuselage 11 itself. The arrangement of components and the fairing may be applicable to any embodiment of the aircraft described herein.

It will be appreciated that in other embodiments, the components arranged on top of the fuselage in the embodiment of Figure 6 may be arranged elsewhere on the aircraft. The location of components on the aircraft may depend on parameters such as whether the internal space of the fuselage is pressurised or unpressurised, whether the aircraft is manned or unmanned, and whether the aircraft is configured to primarily carry passengers or cargo.

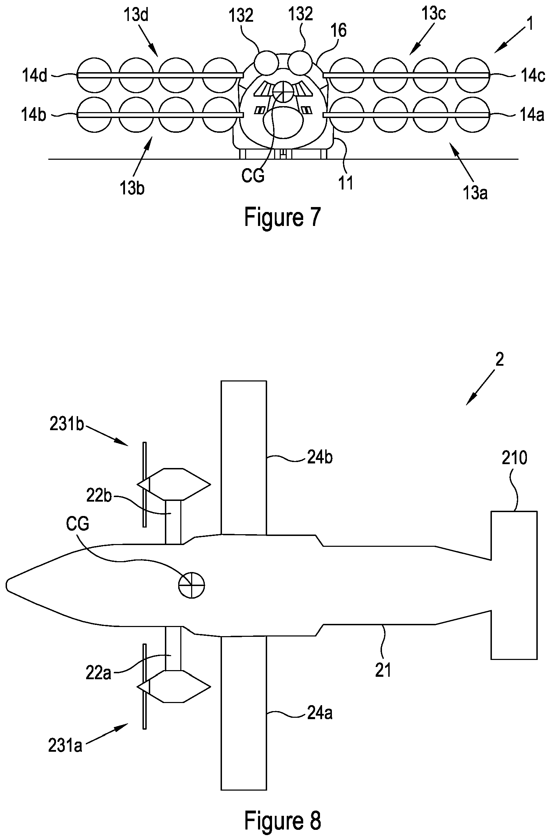

Figure 7 shows a schematic front view of the aircraft 1 of Figure 1. For clarity, not all features of the aircraft 1 are labelled or shown in Figure 7. Figure 7 shows the fairing 16 in cross-section. In this embodiment, the propulsion system of the aircraft 1 comprises two gas turbine engines 132 configured to drive the generator to create electrical energy to power the propulsion units of the aircraft 1. In other embodiments, the propulsion system of the aircraft 1 may comprise one gas turbine engine, or more than two gas turbine engines 132.

In other embodiments, the propulsion mounting spars 12a-d, the tiltable wings 14a-d, and the groups of propulsion units 13a-d may be arranged in any suitable manner with respect to the centre of gravity CG of the aircraft 1. For example, the first and second propulsion mounting spars 12a,b, first and second groups of propulsion units 13a,b, and first and second tiltable wings 14a,b may be arranged directly above the centre of gravity CG of the aircraft 1, and the third and fourth propulsion mounting spars 12c,d, third and fourth groups of propulsion units 13c,d, and third and fourth tiltable wings 14c,d may be arranged directly below the centre of gravity CG of the aircraft 1. The aircraft 1 may also comprise additional propulsion mounting spars, additional groups of propulsion units, and additional tiltable wings in accordance with embodiments of the invention.

Figure 8 shows a schematic plan view of an aircraft 2 according to an example not covered by the presently claimed invention.

The aircraft 2 of Figure 8 shares features in common with the aircraft 1 of Figure 1. Features of the aircraft 2 of Figure 8 are labelled with reference numerals beginning with '2' where like features are labelled in Figure 1 with reference numerals beginning with '1'. For clarity, not all features of the aircraft 2 are labelled or shown in Figure 8.

In the example of Figure 8, the aircraft 2 only comprises first and second propulsion mounting spars 22a,b, mounted either side of the fuselage 21, first and second propulsion units 231a,b mounted to the fuselage 21 by the first and second propulsion mounting spars 22a,b, respectively, and first and second tiltable wings 24a,b. The first and second tiltable wings 24a,b are spaced apart from the first and second propulsion mounting spars 22a,b, respectively, and are disposed in the wake from the first and second propulsion units 231a,b, respectively. The first and second tiltable wings 24a,b are independently tiltable to independently vary the angle of attack of the wings 24a,b.

The angle of attack of the tiltable wings 24a,b can be controlled to control roll of the aircraft 2, as described above with respect to the aircraft of Figure 1. The aircraft 2 further comprises a horizontal stabiliser 210 for controlling the pitch of the aircraft 2 (e.g. via an elevator control surface).

The angle of attack of the tiltable wings 24a,b can be independently controlled to change the position of the centre of lift of the aircraft 2 to control roll of the aircraft. Essentially, the angle of attack of the wings 24a,b can be independently controlled to move the position of the centre of lift of the aircraft 2 from side to side; however, the wings 24a,b are arranged such that the centre of lift of the aircraft 2 is aft of the centre of gravity CG of the aircraft 2. The horizontal stabiliser 210 may be configured to provide a downforce which balances the pitching moment generated by the wings 24a,b. In some embodiments the angle of attack of the horizontal stabiliser 210 can be varied to vary the amount of pitching moment generated by the horizontal stabiliser 210. Alternatively, the horizontal stabiliser may comprise one or more control surfaces (elevators) which can be controlled to vary the amount of pitching moment generated by the horizontal stabiliser 210. The angle of attack of the wings 24a,b and the angle of attack of the horizontal stabiliser 210, and the one or more control surfaces of the horizontal stabiliser 210 where present, can be controlled to stabilise the aircraft 2 in flight. In some embodiments, the aircraft 2 may further comprise a vertical stabiliser.

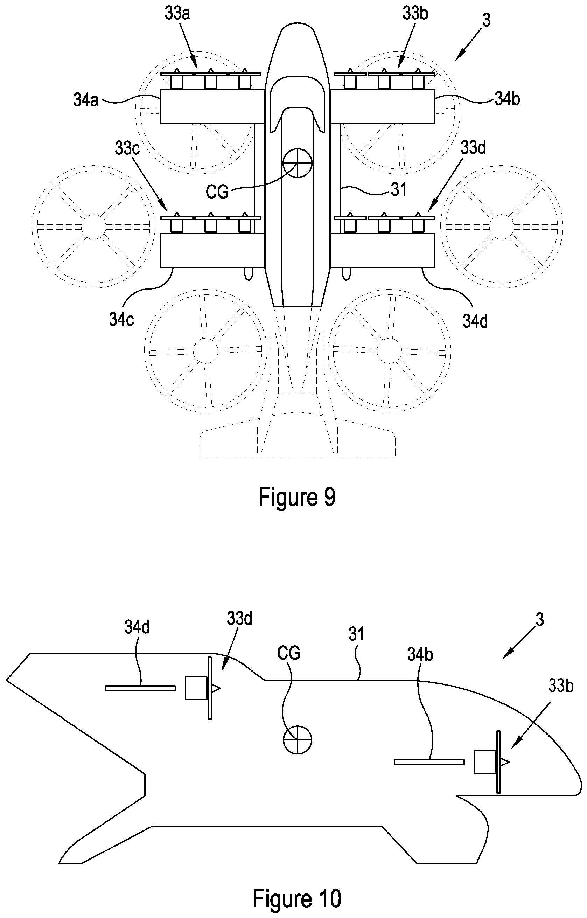

Figure 9 shows a schematic plan view of an aircraft 3 according to an alternative embodiment of the invention. The aircraft 3 of Figure 9 shares features in common with the aircraft 1 of Figure 1. Features of the aircraft 3 of Figure 9 are labelled with reference numerals beginning with '3' where like features are labelled in Figure 1 with reference numerals beginning with '1'. Figure 10 shows a schematic side view of the aircraft 3 of Figure 9. For clarity, not all features of the aircraft 3 are labelled or shown in Figures 9 and 10.

Figure 9 shows the aircraft 3 superimposed on a schematic plan view of a Bell Nexus 6HX, which is an example of a known VTOL tiltrotor aircraft. The useful interior volume of the fuselage 31 of the aircraft 3 is comparable to the interior volume of the fuselage of the Bell Nexus 6HX. Where the Bell Nexus 6HX comprises six tiltable ducted rotors to provide lift and thrust, the aircraft 3 comprises a forward port group of propulsion units 33a, a forward port tiltable wing 34a, a forward starboard group of propulsion units 33b, a forward starboard tiltable wing 34b, an aft port group of propulsion units 33c, an aft port tiltable wing 34c an aft starboard group of propulsion units 33d and an aft starboard tiltable wing 34d which are operable in the same manner as those of the aircraft 1 of Figure 1. Figure 9 illustrates that the present invention has the potential to provide an aircraft with a comparable fuselage interior volume to that of a known aircraft, but with a reduced power requirements and fuel requirements for achieving similar performance. The entire tail and part of the aft fuselage may be removed as well as the ducted rotors (and replaced by the tiltable wing and propulsion system according to embodiments).

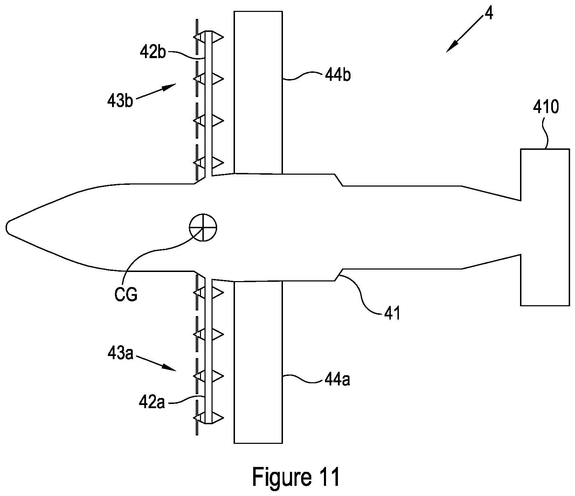

Figure 11 shows a schematic plan view of an aircraft 4 according to an example not covered by the presently claimed invention. The aircraft 4 of Figure 11 shares features in common with the aircraft 1 of Figure 1. Features of the aircraft 4 of Figure 11 are labelled with reference numerals beginning with '4' where like features are labelled in Figure 1 with reference numerals beginning with '1'. For clarity, not all features of the aircraft 4 are labelled or shown in Figure 11.

In the example of Figure 11, the aircraft 4 comprises first and second propulsion mounting spars 42a,b, mounted either side of the fuselage 41, first and second groups of propulsion units 43a,b mounted to the fuselage 41 by the first and second propulsion mounting spars 42a,b, respectively, and first and second tiltable wings 44a,b. The first and second tiltable wings 44a,b are spaced apart from the first and second propulsion mounting spars 42a,b, respectively, and are disposed in the wake from the first and second groups of propulsion units 43a,b, respectively. The first and second tiltable wings 44a,b are independently tiltable to independently vary the angle of attack of the wings 44a,b. The angle of attack of the tiltable wings 44a,b can be controlled to control roll of the aircraft 4, as described above with respect to the aircraft of Figure 1. The aircraft 4 further comprises a horizontal stabiliser 410 for controlling the pitch of the aircraft 4 (e.g. via an elevator control surface).

In the example of Figure 11, each group of propulsion units 43a,b comprises four propulsion units. In other examples, each group of propulsion units 43a,b may comprise a different number of propulsion units. For example, there may be 1, 2, 3 or more than 4 propulsion units per group.

The angle of attack of the tiltable wings 44a,b can be independently controlled to change the position of the centre of lift of the aircraft 4 to control roll of the aircraft. Essentially, the angle of attack of the wings 44a,b can be independently controlled to move the position of the centre of lift of the aircraft 4 from side to side; however, the wings 44a,b are arranged such that the centre of lift of the aircraft 4 is aft of the centre of gravity CG of the aircraft 4. The horizontal stabiliser 410 may be configured to provide a downforce which balances the pitching moment generated by the wings 44a,b. In some embodiments the angle of attack of the horizontal stabiliser 410 can be varied to vary the amount of pitching moment generated by the horizontal stabiliser 410. Alternatively, the horizontal stabiliser may comprise one or more control surfaces (elevators) which can be controlled to vary the amount of pitching moment generated by the horizontal stabiliser 410. The angle of attack of the wings 44a,b and the angle of attack of the horizontal stabiliser 410, and the one or more control surfaces of the horizontal stabiliser 410 where present, can be controlled to stabilise the aircraft 4 in flight. In some embodiments, the aircraft 4 may further comprise a vertical stabiliser.

The aircraft 3 of Figures 9 and 10 are provided merely as illustrative examples of how the invention can be implemented in a range of different configurations. The aircraft 2 of Figure 8 and the aircraft 4 of Figure 11 are however examples not covered by the presently claimed invention.

The skilled person will appreciate that a propulsion mounting spar, propulsion unit, and a tiltable wing, the tiltable wing being spaced apart from the propulsion mounting spar and being disposed in the wake from the propulsion unit, the tiltable wing being arranged to tilt to vary the angle of attack of the tiltable wing, can be implemented in any suitable configuration.

The invention may be implemented alongside any combination of known wings, stabilisers, and control surfaces to provide control of the aircraft. For example, an aircraft according to the invention may comprise one tiltable wing, and associated propulsion mounting spar and propulsion unit(s), and one fixed wing. An aircraft according to the invention may comprise any suitable number of tiltable wings, and associated propulsion mounting spars and propulsion units, alongside any suitable number of fixed wings.

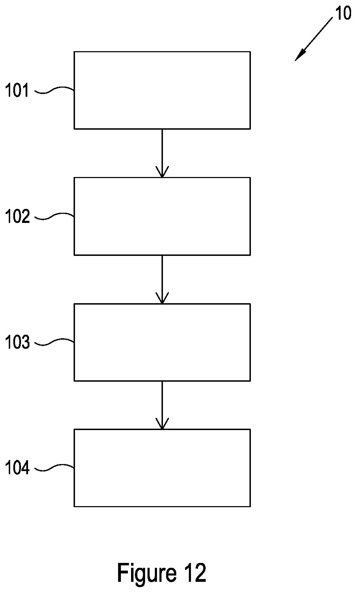

Figure 12 shows a flow chart illustrating an example vertical take-off procedure 10 of an aircraft according to an embodiment of the invention. At step 101, the angle of attack of the tiltable wings is adjusted to a take-off position at which the required lift can be generated to provide vertical take-off. At step 102, the control surfaces arranged at the trailing edge of the tiltable wings, where present, are deployed. At step 103, the active flow control system, where present, is engaged, for example to provide a flow of air to the upper surface of the tiltable wings. At step 104, the propulsion units of the aircraft are powered up. This causes air to be forced over the tiltable wings of the aircraft which creates lift. Where present, the control surfaces direct air forced towards the wings by the propulsion units downwards to provide a vertical component of thrust generated by the propulsion unit. At this stage, the angle of attack of the tiltable wings and the angles of the control surfaces may be adjusted to balance any horizontal component of thrust of the propulsion units trying to push the aircraft forward.

The angle of attack of the tiltable wings, the angle of the control surfaces, the active flow control system, and/or the propulsion units are then controlled to increase the aircraft lift until the amount of lift of the aircraft is sufficient to overcome the force of gravity acting on the aircraft. The aircraft then takes off vertically. Once the aircraft has reached a desired altitude, the angle of attack of the tiltable wings, the angle of the control surfaces, and/or the active flow control system may be controlled to decrease the amount of forward thrust from the propulsion units that is being converted into lift. This will result in an increase in forward airspeed of the aircraft. The flow of air over the wings resulting from forward airspeed will produce further lift, enabling further reductions in the angle of attack of the tiltable wings without loss of height, and greater forward thrust. Eventually, the transition to cruising forward flight will be complete, and the propulsion units may be operated in a cruise mode (at less than full thrust) with the tiltable wings at a relatively low angle of attack. During cruising forward flight, the angle of attack of the tiltable wings may be set to zero. In cruise mode the active flow control system may be deactivated. Landing will see a transition in the opposite direction with the steps essentially reversed.

Although specific examples have been described, the skilled person will appreciate that variations are possible, within the scope of the invention, which should be determined with reference to the accompanying claims.

## Claims

1. An aircraft (1; 3) comprising:
a fuselage (11; 31);
a first propulsion mounting spar (12a,b);
a first propulsion unit (131; 33a,b) mounted to the fuselage (11; 31) by the first propulsion mounting spar (12a,b);
a first tiltable wing (14a,b; 34a,b) spaced apart from the first propulsion mounting spar (12a,b), wherein the first tiltable wing (14a,b; 34a,b) is disposed in the wake from the first propulsion unit (131; 33a,b) and arranged to tilt to vary the angle of attack of the first tiltable wing (14a,b; 34a,b);
a further propulsion mounting spar (12c,d) aft of the first propulsion mounting spar (12a,b);
a further propulsion unit (131; 33c,d) mounted to the fuselage (11; 31) by the further propulsion mounting spar (12c,d); and
a further tiltable wing (14c,d; 34c,d) spaced apart from the further propulsion mounting spar (12c,d), wherein the further tiltable wing (14c,d; 34c,d) is disposed in the wake from the further propulsion unit (131; 33c,d) and arranged to tilt to vary the angle of attack of the further tiltable wing (14c,d; 34c,d),
**characterized in that**
at least one of the first propulsion mounting spar (12a,b) and further propulsion mounting spar (12c,d) do not comprise a wing.

2. The aircraft (1; 3) of claim 1, wherein at least one of the first tiltable wing (14a,b; 34a,b) and further tiltable wing (14c,d; 34c,d) comprises an active flow control actuator (141, 142, 143, 144).

3. The aircraft (1; 3) of claim 1 or claim 2, wherein at least one of the first tiltable wing (14a,b; 34a,b) and the further tiltable wing (14c,d; 34c,d) is arranged to tilt to provide an angle of attack of the respective first tiltable wing (14a,b; 34a,b) or further tiltable wing (14c,d; 34c,d) of at least 20 degrees.

4. The aircraft (1; 3) of any preceding claim, comprising a plurality of first propulsion units (131; 33a,b) mounted to the fuselage (11; 31) by the first propulsion mounting spar (12a,b), the plurality of first propulsion units (131; 33a,b) comprising the first propulsion unit (131; 33a,b), wherein the first tiltable wing (14a,b; 34a,b) is disposed in the wake from the plurality of first propulsion units (131; 33a,b), and/or a plurality of further propulsion units (131; 33c,d) mounted to the fuselage (11; 31) by the further propulsion mounting spar (12c,d), the plurality of further propulsion units (131; 33c,d) comprising the further propulsion unit (131; 33c,d), wherein the further tiltable wing (14c,d; 34c,d) is disposed in the wake from the plurality of further propulsion units (131; 33c,d).

5. The aircraft (1; 3) of claim 4, wherein the top of the wake from the plurality of first propulsion units (131; 33a,b) is configured to be above an upper surface of a leading edge of the first tiltable wing (14a,b; 34a,b), such that at least part of the wake from the plurality of first propulsion units (131; 33a,b) passes over the upper surface of the first tiltable wing (14a,b; 34a,b), and/or the top of the wake from the plurality of further propulsion units (131; 33c,d) is configured to be above an upper surface of a leading edge of the further tiltable wing (14c,d; 34c,d), such that at least part of the wake from the plurality of further propulsion units (131; 33c,d) passes over the upper surface of the further tiltable wing (14c,d; 34c,d).

6. The aircraft (1; 3) of claim 4 or claim 5, wherein the first tiltable wing (14a,b; 34a,b) is operable so that a trailing edge of the first tiltable wing (14a,b; 34a,b) moves below the bottom of the wake from the plurality of first propulsion units (131; 33a,b), such that a portion of the wake near the bottom of the wake is redirected by a lower surface of the first tiltable wing (14a,b; 34a,b), and/or the further tiltable wing (14c,d; 34c,d) is operable so that a trailing edge of the further tiltable wing (14c,d; 34c,d) moves below the bottom of the wake from the plurality of further propulsion units (131; 33c,d), such that a portion of the wake near the bottom of the wake is redirected by a lower surface of the further tiltable wing (14c,d; 34c,d); optionally wherein the first tiltable wing (14a,b; 34a,b) comprises one or more control surfaces (17, 18) mounted on the trailing edge of the first tiltable wing (14a,b; 34a,b), the one or more control surfaces (17, 18) being operable to move below the bottom of the wake from the plurality of first propulsion units (131; 33a,b), and/or the further tiltable wing (14c,d; 34c,d) comprises one or more control surfaces (17, 18) mounted on the trailing edge of the further tiltable wing (14c,d; 34c,d), the one or more control surfaces (17, 18) being operable to move below the bottom of the wake from the plurality of further propulsion units (131; 33c,d), and/or wherein redirection of the wake from the plurality of first propulsion units (131; 33a,b) by the lower surface of the first tiltable wing (14a,b; 34a,b) generates a vertical thrust, and/or redirection of the wake from the plurality of further propulsion units (131; 33c,d) by the lower surface of the further tiltable wing (14c,d; 34c,d) generates a vertical thrust.

7. The aircraft (1; 3) of any preceding claim, wherein the first propulsion unit (131; 33a,b) and/or the further propulsion unit (131; 33c,d) is not tiltable relative to the fuselage (11; 31), and/or wherein the first propulsion unit (131; 33a,b) and/or the further propulsion unit (131; 33c,d) comprises a propeller (1312) with fixed pitch, and/or wherein no propulsion unit is mounted to the first tiltable wing (14a,b; 34a,b) and/or the further tiltable wing (14c,d; 34c,d).

8. The aircraft (1; 3) of any preceding claim, wherein the first propulsion unit (131; 33a,b) comprises a first electric propulsion unit and/or the further propulsion unit (131; 33c,d) comprises a further electric propulsion unit (131; 33c,d).

9. The aircraft (1; 3) of claim 8, comprising a propulsion system comprising the first electric propulsion unit (131; 33a,b) and/or the further electric propulsion unit (131; 33c,d), wherein the propulsion system comprises a hybrid electric propulsion system optionally wherein the propulsion system comprises a turboelectric propulsion system.

10. The aircraft (1; 3) of any preceding claim, comprising one or more components (132, 133, 134, 151, 152) arranged on top of the fuselage (11; 31), optionally comprising a fairing (16) housing the one or more components (132, 133, 134, 151, 152) arranged on top of the fuselage (11; 31), optionally wherein the one or more components (132, 133, 134, 151, 152) comprises a battery of a turboelectric propulsion system.

11. The aircraft (1; 3) of claim 10, wherein the one or more components (132, 133, 134, 151, 152) comprises one or more of: a gas turbine engine (132), a generator (134), and a fuel tank (133).

12. The aircraft (1; 3) of claim 10 or claim 11, when dependent on claim 2, comprising an active flow control system (152) comprising the active flow control actuator (141, 142, 143, 144), wherein the one or more components (132, 133, 134, 151, 152) arranged on top of the fuselage (11; 31) comprises one or more components of the active flow control system (152).

13. The aircraft (1; 3) of any preceding claim, wherein the further tiltable wing (14c,d; 34c,d) is disposed out of the wake from the first propulsion unit (131; 33a,b).

14. The aircraft (1; 3) of any preceding claim, wherein the first tiltable wing (14a,b; 34a,b) and the further tiltable wing (14c,d; 34c,d) are independently tiltable to independently vary the angle of attack of the first tiltable wing (14a,b; 34a,b) and the angle of attack of the further tiltable wing (14c,d; 34c,d), optionally wherein the first propulsion unit (131; 33a,b) and the further propulsion unit (131; 33c,d) are independently controllable to independently vary an amount of thrust generated by the first propulsion unit (131; 33a,b) and an amount of thrust generated by the further propulsion unit (131; 33c,d).

15. The aircraft (1; 3) of any preceding claim, wherein the first tiltable wing (14a,b; 34a,b) is arranged forward of the centre of gravity, CG, of the aircraft (1; 3) and the further tiltable wing (14c,d; 34c,d) is arranged aft of the centre of gravity, CG, of the aircraft (1; 3), optionally wherein one of either the first tiltable wing (14a,b; 34a,b) and the further tiltable wing (14c,d; 34c,d) is arranged above the centre of gravity, CG, of the aircraft (1; 3), and the other of either the first tiltable wing (14a,b; 34a,b) and the further tiltable wing (14c,d; 34c,d) is arranged below the centre of gravity, CG, of the aircraft (1; 3), optionally wherein the first tiltable wing (14a,b; 34a,b) is arranged below the centre of gravity, CG, of the aircraft (1; 3) and the further tiltable wing (14c,d; 34c,d) is arranged above the centre of gravity, CG, of the aircraft (1; 3).

## Patentansprüche

1. Luftfahrzeug (1; 3), umfassend:
einen Rumpf (11; 31);
einen ersten Antriebsbefestigungsholm (12a,b);
eine erste Antriebseinheit (131; 33a,b), die an dem Rumpf (11; 31) durch den ersten Antriebsbefestigungsholm (12a,b) befestigt ist;
einen ersten kippbaren Flügel (14a,b; 34a,b), der zu dem ersten Antriebsbefestigungsholm (12a,b) beabstandet ist, wobei der erste kippbare Flügel (14a,b; 34a,b) im Nachlauf der ersten Antriebseinheit (131; 33a,b) angeordnet ist und so eingerichtet ist, dass er kippt, um den Anstellwinkel des ersten kippbaren Flügels (14a,b; 34a,b) zu verändern;
einen weiteren Antriebsbefestigungsholm (12c, d) hinter dem ersten Antriebsbefestigungsholm (12a, b);
eine weitere Antriebseinheit (131; 33c,d), die an dem Rumpf (11; 31) durch den weiteren Antriebsbefestigungsholm (12c,d) befestigt ist; und
einen weiteren kippbaren Flügel (14c,d; 34c,d), der zu dem weiteren Antriebsbefestigungsholm (12c,d) beabstandet ist, wobei der weitere kippbare Flügel (14c,d; 34c,d) im Nachlauf der weiteren Antriebseinheit (131; 33c,d) angeordnet ist und so eingerichtet ist, dass er kippt, um den Anstellwinkel des weiteren kippbaren Flügels (14c,d; 34c,d) zu verändern, **dadurch gekennzeichnet, dass** der erste Antriebsbefestigungsholm (12a,b) und/oder der weitere Antriebsbefestigungsholm (12c,d) keinen Flügel umfasst.

2. Luftfahrzeug (1; 3) nach Anspruch 1, wobei der erste kippbare Flügel (14a, b; 34a, b) und/oder der weitere kippbare Flügel (14c, d; 34c, d) einen aktiven Strömungssteuerungsaktor (141, 142, 143, 144) umfasst.

3. Luftfahrzeug (1; 3) nach Anspruch 1 oder Anspruch 2, wobei der erste kippbare Flügel (14a,b; 34a,b) und/oder der weitere kippbare Flügel (14c,d; 34c,d) so eingerichtet ist, dass er kippt, um einen Anstellwinkel des ersten kippbaren Flügels (14a,b; 34a,b) bzw. des weiteren kippbaren Flügels (14c,d; 34c,d) von mindestens 20 Grad zu liefern.

4. Luftfahrzeug (1; 3) nach einem der vorhergehenden Ansprüche, umfassend eine Vielzahl erster Antriebseinheiten (131; 33a,b), die durch den ersten Antriebsbefestigungsholm (12a,b) am Rumpf (11; 31) befestigt ist, wobei die Vielzahl erster Antriebseinheiten (131; 33a,b) die erste Antriebseinheit (131; 33a,b) umfasst, wobei der erste kippbare Flügel (14a,b; 34a,b) im Nachlauf der Vielzahl erster Antriebseinheiten (131; 33a,b) angeordnet ist, und/oder eine Vielzahl weiterer Antriebseinheiten (131; 33c,d), die durch den weiteren Antriebsbefestigungsholm (12c,d) am Rumpf (11; 31) befestigt ist, wobei die Vielzahl weiterer Antriebseinheiten (131; 33c,d) die weitere Antriebseinheit (131; 33c,d) umfasst, wobei der weitere kippbare Flügel (14c,d; 34c,d) im Nachlauf der Vielzahl weiterer Antriebseinheiten (131; 33c,d) angeordnet ist.

5. Luftfahrzeug (1; 3) nach Anspruch 4, wobei die Oberseite des Nachlaufs der Vielzahl erster Antriebseinheiten (131; 33a,b) so konfiguriert ist, dass sie sich über einer Oberseite einer Anströmkante des ersten kippbaren Flügels (14a,b; 34a,b) befindet, so dass zumindest ein Teil des Nachlaufs der Vielzahl erster Antriebseinheiten (131; 33a,b) über die Oberseite des ersten kippbaren Flügels (14a,b; 34a,b) verläuft, und/oder die Oberseite des Nachlaufs der Vielzahl weiterer Antriebseinheiten (131; 33c,d) so konfiguriert ist, dass sie sich über einer Oberseite einer Anströmkante des weiteren kippbaren Flügels (14c,d; 34c,d) befindet, so dass zumindest ein Teil des Nachlaufs der Vielzahl weiterer Antriebseinheiten (131; 33c,d) über die Oberseite des weiteren kippbaren Flügels (14c,d; 34c,d) verläuft.

6. Luftfahrzeug (1; 3) nach Anspruch 4 oder Anspruch 5, wobei der erste kippbare Flügel (14a,b; 34a,b) so betreibbar ist, dass sich eine Abströmkante des ersten kippbaren Flügels (14a,b; 34a,b) unter die Unterseite des Nachlaufs der Vielzahl erster Antriebseinheiten (131; 33a,b) bewegt, so dass ein Teil des Nachlaufs in der Nähe der Unterseite des Nachlaufs durch eine Unterseite des ersten kippbaren Flügels (14a,b; 34a,b) umgelenkt wird, und/oder der weitere kippbare Flügel (14c,d; 34c,d) so betreibbar ist, dass sich eine Abströmkante des weiteren kippbaren Flügels (14c,d; 34c,d) unter die Unterseite des Nachlaufs der Vielzahl weiterer Antriebseinheiten (131; 33c,d) bewegt, so dass ein Teil des Nachlaufs in der Nähe der Unterseite des Nachlaufs durch eine Unterseite des weiteren kippbaren Flügels (14c,d; 34c,d) umgelenkt wird; wobei der erste kippbare Flügel (14a,b; 34a,b) wahlweise eine oder mehrere Steuerflächen (17, 18) umfasst, die an der Abströmkante des ersten kippbaren Flügels (14a,b; 34a,b) befestigt sind, wobei die eine oder die mehreren Steuerflächen (17, 18) so betreibbar sind, dass sie sich unter die Unterseite des Nachlaufs der Vielzahl erster Antriebseinheiten (131; 33a,b) bewegen, und/oder der weitere kippbare Flügel (14c,d; 34c,d) eine oder mehrere Steuerflächen (17, 18) umfasst, die an der Abströmkante des weiteren kippbaren Flügels (14c,d; (14c,d; 34c,d) befestigt ist, wobei die eine oder die mehreren Steuerflächen (17, 18) so betreibbar sind, dass sie sich unter die Unterseite des Nachlaufs der Vielzahl weiterer Antriebseinheiten (131; 33c,d) bewegen, und/oder wobei eine Umlenkung des Nachlaufs der Vielzahl erster Antriebseinheiten (131; 33a,b) durch die Unterseite des ersten kippbaren Flügels (14a,b; 34a,b) einen vertikalen Schub erzeugt und/oder eine Umlenkung des Nachstroms der Vielzahl weiterer Antriebseinheiten (131; 33c,d) durch die Unterseite des weiteren kippbaren Flügels (14c,d; 34c,d) einen vertikalen Schub erzeugt.

7. Luftfahrzeug (1; 3) nach einem der vorhergehenden Ansprüche, wobei die erste Antriebseinheit (131; 33a,b) und/oder die weitere Antriebseinheit (131; 33c,d) nicht relativ zum Rumpf (11; 31) kippbar ist, und/oder wobei die erste Antriebseinheit (131; 33a,b) und/oder die weitere Antriebseinheit (131; 33c,d) einen Propeller (1312) mit fester Steigung umfasst, und/oder wobei keine Antriebseinheit an dem ersten kippbaren Flügel (14a,b; 34a,b) und/oder dem weiteren kippbaren Flügel (14c,d; 34c,d) befestigt ist.

8. Luftfahrzeug (1; 3) nach einem der vorhergehenden Ansprüche, wobei die erste Antriebseinheit (131; 33a,b) eine erste elektrische Antriebseinheit umfasst und/oder die weitere Antriebseinheit (131; 33c,d) eine weitere elektrische Antriebseinheit (131; 33c,d) umfasst.

9. Luftfahrzeug (1; 3) nach Anspruch 8, umfassend ein Antriebssystem, das die erste elektrische Antriebseinheit (131; 33a,b) und/oder die weitere elektrische Antriebseinheit (131; 33c,d) umfasst, wobei das Antriebssystem ein hybrides elektrisches Antriebssystem umfasst, wobei das Antriebssystem wahlweise ein turboelektrisches Antriebssystem umfasst.

10. Luftfahrzeug (1; 3) nach einem der vorhergehenden Ansprüche, umfassend eine oder mehrere Komponenten (132, 133, 134, 151, 152), die oben auf dem Rumpf (11; 31) angeordnet sind, wahlweise umfassend eine Verkleidung (16), in der die eine oder die mehreren Komponenten (132, 133, 134, 151, 152) untergebracht sind, die oben auf dem Rumpf (11; 31) angeordnet sind, wobei die eine oder die mehreren Komponenten (132, 133, 134, 151, 152) wahlweise eine Batterie eines turboelektrischen Antriebssystems umfassen.

11. Flugzeug (1; 3) nach Anspruch 10, wobei die eine oder die mehreren Komponenten (132, 133, 134, 151, 152) eines oder mehrere der Folgenden umfassen: ein Gasturbinentriebwerk (132), einen Generator (134) und einen Kraftstofftank (133).

12. Luftfahrzeug (1; 3) nach Anspruch 10 oder Anspruch 11, soweit von Anspruch 2 abhängig, umfassend ein aktives Strömungssteuerungssystem (152), das den aktiven Strömungssteuerungsaktor (141, 142, 143, 144) umfasst, wobei die eine oder die mehreren Komponenten (132, 133, 134, 151, 152), die oben auf dem Rumpf (11; 31) angeordnet sind, eine oder mehrere Komponenten des aktiven Strömungssteuerungssystems (152) umfassen.

13. Luftfahrzeug (1; 3) nach einem der vorhergehenden Ansprüche, wobei der weitere kippbare Flügel (14c,d; 34c,d) außerhalb des Nachlaufs der ersten Antriebseinheit (131; 33a,b) angeordnet ist.

14. Luftfahrzeug (1; 3) nach einem der vorhergehenden Ansprüche, wobei der erste kippbare Flügel (14a,b; 34a,b) und der weitere kippbare Flügel (14c,d; 34c,d) unabhängig voneinander kippbar sind, um den Anstellwinkel des ersten kippbaren Flügels (14a,b; 34a,b) und den Anstellwinkel des weiteren kippbaren Flügels (14c,d; 34c,d) unabhängig voneinander zu verändern, wobei wahlweise die erste Antriebseinheit (131; 33a,b) und die weitere Antriebseinheit (131; 33c,d) unabhängig voneinander steuerbar sind, um einen Betrag eines von der ersten Antriebseinheit (131; 33a,b) erzeugten Schubs und einen Betrag eines von der weiteren Antriebseinheit (131; 33c,d) erzeugten Schubs unabhängig voneinander zu verändern.

15. Luftfahrzeug (1; 3) nach einem der vorhergehenden Ansprüche, wobei der erste kippbare Flügel (14a,b; 34a,b) vor dem Schwerpunkt, CG, des Luftfahrzeugs (1; 3) angeordnet ist und der weitere kippbare Flügel (14c,d; 34c,d) hinter dem Schwerpunkt, CG, des Luftfahrzeugs (1; 3) angeordnet ist, wobei wahlweise entweder der erste kippbare Flügel (14a,b; 34a,b) oder der weitere kippbare Flügel (14c,d; 34c,d) oberhalb des Schwerpunkts, CG, des Luftfahrzeugs (1; 3) angeordnet ist und der jeweils andere des ersten kippbaren Flügels (14a,b; 34a,b) und des weiteren kippbaren Flügels (14c,d; 34c,d) unterhalb des Schwerpunkts, CG, des Luftfahrzeugs (1; 34a,b) angeordnet ist, wobei wahlweise der erste kippbare Flügel (14a,b; 34a,b) unterhalb des Schwerpunkts, CG, des Luftfahrzeugs (1; 3) angeordnet ist und der weitere kippbare Flügel (14c,d; 34c,d) oberhalb des Schwerpunkts, CG, des Luftfahrzeugs (1; 3) angeordnet ist.

## Revendications

1. Aéronef (1 ; 3) comprenant :
un fuselage (11 ; 31) ;
un premier longeron de montage de propulsion (12a, b) ;
une première unité de propulsion (131 ; 33a, b) montée sur le fuselage (11 ; 31) par le premier longeron de montage de propulsion (12a,b) ;
une première aile inclinable (14a, b ; 34a, b) espacée du premier longeron de montage de propulsion (12a, b), la première aile inclinable (14a, b ; 34a, b) étant disposée dans le sillage de la première unité de propulsion (131 ; 33a, b) et conçue pour s'incliner afin de faire varier l'angle d'attaque de la première aile inclinable (14a, b ; 34a, b) ;
un longeron de montage de propulsion supplémentaire (12c, d) à l'arrière du premier longeron de montage de propulsion (12a, b) ;
une unité de propulsion supplémentaire (131 ; 33c, d) montée sur le fuselage (11 ; 31) par le longeron de montage de propulsion supplémentaire (12c, d) ; et
une aile inclinable supplémentaire (14c, d ; 34c, d) espacée du longeron de montage de propulsion supplémentaire (12c, d), l'aile inclinable supplémentaire (14c, d ; 34c, d) étant disposée dans le sillage de l'unité de propulsion supplémentaire (131 ; 33c, d) et conçue pour s'incliner afin de faire varier l'angle d'attaque de l'aile inclinable supplémentaire (14c, d ; 34c, d), **caractérisé en ce qu'**au moins l'un du premier longeron de montage de propulsion (12a, b) et du longeron de montage de propulsion supplémentaire (12c, d) ne comprend pas d'aile.

2. Aéronef (1 ; 3) selon la revendication 1, au moins une de la première aile inclinable (14a, b ; 34a, b) et de l'aile inclinable supplémentaire (14c, d ; 34c, d) comprenant un actionneur de commande de flux actif (141, 142, 143, 144).

3. Aéronef (1 ; 3) selon la revendication 1 ou la revendication 2, au moins une de la première aile inclinable (14a, b ; 34a, b) et de l'aile inclinable supplémentaire (14c, d ; 34c, d) étant conçue pour s'incliner de sorte à fournir un angle d'attaque de la première aile inclinable (14a, b ; 34a, b) ou de l'aile inclinable supplémentaire (14c, d ; 34c, d) respective d'au moins 20 degrés.

4. Aéronef (1 ; 3) selon l'une quelconque des revendications précédentes, comprenant une pluralité de premières unités de propulsion (131 ; 33a, b) montées sur le fuselage (11 ; 31) par le premier longeron de montage de propulsion (12a, b), la pluralité de premières unités de propulsion (131 ; 33a, b) comprenant la première unité de propulsion (131 ; 33a, b), la première aile inclinable (14a, b ; 34a, b) étant disposée dans le sillage de la pluralité de premières unités de propulsion (131 ; 33a, b), et/ou une pluralité d'unités de propulsion supplémentaires (131 ; 33c, d) montées sur le fuselage (11 ; 31) par le longeron de montage de propulsion supplémentaire (12c, d), la pluralité d'unités de propulsion supplémentaires (131; 33c, d) comprenant l'unité de propulsion supplémentaire (131 ; 33c, d), l'aile inclinable supplémentaire (14c, d ; 34c, d) étant disposée dans le sillage de la pluralité d'unités de propulsion supplémentaires (131 ; 33c, d).

5. Aéronef (1 ; 3) selon la revendication 4, le sommet du sillage de la pluralité de premières unités de propulsion (131 ; 33a, b) étant conçu pour être au-dessus d'une surface supérieure d'un bord d'attaque de la première aile inclinable (14a, b ; 34a, b), de sorte qu'au moins une partie du sillage de la pluralité de premières unités de propulsion (131 ; 33a, b) passe au-dessus de la surface supérieure de la première aile inclinable (14a, b ; 34a, b), et/ou le sommet du sillage de la pluralité d'unités de propulsion supplémentaires (131 ; 33c, d) étant conçu pour être au-dessus d'une surface supérieure d'un bord d'attaque de l'aile inclinable supplémentaire (14c, d ; 34c, d), de sorte qu'au moins une partie du sillage de la pluralité d'unités de propulsion supplémentaires (131 ; 33c, d) passe au-dessus de la surface supérieure de l'aile inclinable supplémentaire (14c, d ; 34c, d).

6. Aéronef (1; 3) selon la revendication 4 ou la revendication 5, la première aile inclinable (14a, b ; 34a, b) pouvant être utilisée de sorte qu'un bord de fuite de la première aile inclinable (14a, b ; 34a, b) se déplace sous le fond du sillage de la pluralité de premières unités de propulsion (131 ; 33a, b), de sorte qu'une partie du sillage près du fond du sillage soit redirigée par une surface inférieure de la première aile inclinable (14a, b ; 34a, b), et/ou l'aile inclinable supplémentaire (14c, d ; 34c, d) pouvant être utilisée de sorte qu'un bord de fuite de l'aile inclinable supplémentaire (14c, d ; 34c, d) se déplace sous le fond du sillage de la pluralité d'unités de propulsion supplémentaires (131 ; 33c, d), de sorte qu'une partie du sillage près du fond du sillage soit redirigée par une surface inférieure de l'aile inclinable supplémentaire (14c, d ; 34c, d) ; éventuellement, la première aile inclinable (14a, b ; 34a, b) comprenant une ou plusieurs surfaces de commande (17, 18) montées sur le bord de fuite de la première aile inclinable (14a, b ; 34a, b), la ou les surfaces de commande (17, 18) pouvant se déplacer sous le fond du sillage de la pluralité de premières unités de propulsion (131 ; 33a, b), et/ou l'aile inclinable supplémentaire (14c, d ; 34c, d) comprenant une ou plusieurs surfaces de commande (17, 18) montées sur le bord de fuite de l'aile inclinable supplémentaire (14c, d ; 34c, d), la ou les surfaces de commande (17, 18) pouvant se déplacer sous le fond du sillage de la pluralité d'unité de propulsion supplémentaires (131 ; 33c, d), et/ou la redirection du sillage de la pluralité de premières unités de propulsion (131 ; 33a, b) par la surface inférieure de la première aile inclinable (14a, b ; 34a, b) générant une poussée verticale, et/ou la redirection du sillage de la pluralité d'unité de propulsion supplémentaires (131 ; 33c, d) par la surface inférieure de l'aile inclinable supplémentaire (14c, d ; 34c, d) générant une poussée verticale.

7. Aéronef (1; 3) selon l'une quelconque des revendications précédentes, la première unité de propulsion (131 ; 33a, b) et/ou l'unité de propulsion supplémentaire (131 ; 33c, d) n'étant pas inclinable par rapport au fuselage (11 ; 31), et/ou la première unité de propulsion (131 ; 33a, b) et/ou l'unité de propulsion supplémentaire (131; 33c, d) comprenant une hélice (1312) à pas fixe, et/ou aucune unité de propulsion n'étant montée sur la première aile inclinable (14a, b ; 34a, b) et/ou l'aile inclinable supplémentaire (14c, d ; 34c, d).

8. Aéronef (1 ; 3) selon l'une quelconque des revendications précédentes, la première unité de propulsion (131 ; 33a, b) comprenant une première unité de propulsion électrique et/ou l'unité de propulsion supplémentaire (131 ; 33c, d) comprenant une unité de propulsion électrique supplémentaire (131 ; 33c, d).

9. Aéronef (1 ; 3) selon la revendication 8, comprenant un système de propulsion comprenant la première unité de propulsion électrique (131 ; 33a, b) et/ou l'unité de propulsion électrique supplémentaire (131 ; 33c, d), le système de propulsion comprenant un système de propulsion électrique hybride, éventuellement le système de propulsion comprenant un système de propulsion turboélectrique.

10. Aéronef (1; 3) selon l'une quelconque des revendications précédentes, comprenant un ou plusieurs composants (132, 133, 134, 151, 152) disposés sur le dessus du fuselage (11 ; 31), comprenant éventuellement un carénage (16) accueillant le ou les composants (132, 133, 134, 151, 152) disposés sur le dessus du fuselage (11 ; 31), éventuellement le ou les composants (132, 133, 134, 151, 152) comprenant une batterie d'un système de propulsion turboélectrique.

11. Aéronef (1 ; 3) selon la revendication 10, le ou les composants (132, 133, 134, 151, 152) comprenant un ou plusieurs parmi : un moteur à turbine à gaz (132), un générateur (134) et un réservoir de carburant (133).

12. Aéronef (1 ; 3) selon la revendication 10 ou la revendication 11, lorsqu'elle dépend de la revendication 2, comprenant un système de commande de flux actif (152) comprenant l'actionneur de commande de flux actif (141, 142, 143, 144), le ou les composants (132, 133, 134, 151, 152) disposés sur le dessus du fuselage (11; 31) comprenant un ou plusieurs composants du système de commande de flux actif (152).

13. Aéronef (1; 3) selon l'une quelconque des revendications précédentes, l'aile inclinable supplémentaire (14c, d ; 34c, d) étant disposée hors du sillage de la première unité de propulsion (131 ; 33a, b) .

14. Aéronef (1; 3) selon l'une quelconque des revendications précédentes, la première aile inclinable (14a, b ; 34a, b) et l'aile inclinable supplémentaire (14c, d ; 34c, d) étant indépendamment inclinables pour faire varier indépendamment l'angle d'attaque de la première aile inclinable (14a, b ; 34a, b) et l'angle d'attaque de l'aile inclinable supplémentaire (14c, d ; 34c, d), éventuellement la première unité de propulsion (131 ; 33a, b) et l'unité de propulsion supplémentaire (131 ; 33c, d) pouvant être indépendamment commandées pour faire varier indépendamment une quantité de poussée générée par la première unité de propulsion (131 ; 33a, b) et une quantité de poussée générée par l'unité de propulsion supplémentaire (131 ; 33c, d).

15. Aéronef (1; 3) selon l'une quelconque des revendications précédentes, la première aile inclinable (14a, b ; 34a, b) étant disposée à l'avant du centre de gravité, CG, de l'aéronef (1 ; 3) et l'aile inclinable supplémentaire (14c, d ; 34c, d) étant disposée à l'arrière du centre de gravité, CG, de l'aéronef (1 ; 3), éventuellement l'une de la première aile inclinable (14a, b ; 34a, b) et de l'aile inclinable supplémentaire (14c, d ; 34c, d) étant disposée au-dessus du centre de gravité, CG, de l'aéronef (1 ; 3), et l'autre de la première aile inclinable (14a, b ; 34a, b) et de l'aile inclinable supplémentaire (14c, d ; 34c, d) étant disposée en dessous du centre de gravité, CG, de l'aéronef (1; 3), éventuellement la première aile inclinable (14a, b ; 34a, b) étant disposée en dessous du centre de gravité, CG, de l'aéronef (1 ; 3) et l'aile inclinable supplémentaire (14c, d ; 34c, d) étant disposée au-dessus du centre de gravité, CG, de l'aéronef (1 ; 3) .
